Europäisches Patentamt

European Patent Office

Office européen des brevets

(19)

(11) EP 0 985 302 B1

(12) EUROPEAN PATENT SPECIFICATION

(45) Date of publication and mention
of the grant of the patent:
**17.08.2005 Bulletin 2005/33**

(51) Int Cl.⁷: **H04L 25/03**

(21) Application number: **98932145.0**

(22) Date of filing: **03.06.1998**

(86) International application number:
**PCT/EP1998/003486**

(87) International publication number:
**WO 1998/056119 (10.12.1998 Gazette 1998/49)**

(54) **NON-COHERENT SEQUENCE ESTIMATION RECEIVER FOR DIGITAL MODULATIONS**

NICHTKOHÄRENTE FOLGESCHÄTZUNGSEMPFÄNGER FÜR DIGITALEN MODULATIONEN

RECEPTEUR NON COHERENT D'ESTIMATION DE SEQUENCE DE SYMBOLES UTILISE EN CAS
DE MODULATIONS NUMERIQUES

(84) Designated Contracting States:
**DE FI FR GB IT SE**

(30) Priority: **03.06.1997 IT MI971301**

(43) Date of publication of application:
**15.03.2000 Bulletin 2000/11**

(60) Divisional application:
**04030138.4 / 1 531 572**

(73) Proprietor: **Siemens Mobile Communications
S.p.A.
20126 Milano (IT)**

(72) Inventors:
• **RAHELI, Riccardo
I-43100 Parma (IT)**
• **COLAVOLPE, Giulio
I-87032 Amantea (IT)**

(74) Representative: **Giustini, Delio
Siemens Information and
Communication Networks S.p.A.
Palazzo Gorky
Via Monfalcone, 1
20092 Cinisello Balsamo (IT)**

(56) References cited:
• **D'ANDREA A N ET AL: "APPROXIMATE ML
DECODING OF CODED PSK WITH NO EXPLICIT
CARRIER PHASE REFERENCE" IEEE
TRANSACTIONS ON COMMUNICATIONS, vol.
42, no. 2/3/4, 1 February 1994, pages 1033-1039,
XP000447352**

• **RAPHAELI D: "NONCOHERENT CODED
MODULATION" IEEE TRANSACTIONS ON
COMMUNICATIONS, vol. 44, no. 2, 1 February
1996, pages 172-183, XP000554667 cited in the
application**
• **P. Y. KAM ET AL: "A Viterbi-type algorithm for
efficient estimation of M-PSK sequences over
the Gaussian channel with unknown carrier
phase" IEEE TRANSACTIONS ON
COMMUNICATIONS, vol. 43, no. 9, September
1995, pages 2429-2433, XP002089277 USA, ISSN
0090-6778 cited in the application**
• **RAHELI R ET AL: "PER-SURVIVOR
PROCESSING: A GENERAL APPROACH TO
MLSE IN UNCERTAIN ENVIRONMENTS" IEEE
TRANSACTIONS ON COMMUNICATIONS, vol.
43, no. 2/03/04, 2 February 1995, pages 354-360,
XP002059868 cited in the application**
• **COLAVOLPE G ET AL: "NON-COHERENT
SEQUENCE DETECTION OF M-ARY PSK" 1997
IEEE INTERNATIONAL CONFERENCE ON
COMMUNICATIONS, MONTREAL, vol. 1, 8 - 12
June 1997, pages 21-25, XP000740196
INSTITUTE OF ELECTRICAL AND
ELECTRONICS ENGINEERS**
• **COLAVOLPE G ET AL: "Non-coherent sequence
detection of QAM" PROCEEDINGS OF THE 1997
IEEE INTERNATIONAL SYMPOSIUM ON
INFORMATION THEORY, ULM, GERMANY,29
June 1997 - 4 July 1997, page 536 XP002089321
ISBN 0-7803-3956-8, 1997, IEEE, New York, NY,
USA**

**Description**

Field of the Invention

The present invention relates to the field of digitally modulated radio signals and more in particular to a method and receiver for non-coherently estimating sequences of symbols impressed on a digitally modulated transmission carrier. The communication channel is affected by AWGN noise (Additive White Gaussian Noise). In the considered technique field, there are different classes of receivers for such channels.

Background Art

A first class of receivers is based on the structure of an optimum coherent receiver, that is, a receiver that minimizes the error possibility on symbols decided should the synchronism be perfectly known, and in particular, the phase of the signal received, which will be dealt with hereafter. The implementation of such a receiver does not show particular problems in a laboratory environment, where in fact, the modulation carrier is always available, but it cannot be followed up in practice when this receiver is placed in field and the carrier is not available. In these cases, a preferred solution is to supply the receiver with a synchronization device enabling to «recover» the information on the phase of the modulated carrier. The devices more used to this purpose are phase locked loops (Phase Locked Loop, or PLL). Such a receiver shall be hereinafter defined «pseudocoherent", since it is implemented according to the configuration of a coherent receiver to which a phase reference is supplied by said synchronization device. In these receivers the phase is recovered at less than $2\pi/n$ multiples, where n depends on the type of modulation adopted. As a consequence of the ambiguity on the phase introduced by the PLL, a differential coding must be used in transmission, that is a coding where the information is not associated to the absolute phase of the modulation carrier, but to the phase difference between two consecutive symbols. As an alternative to the differential coding it is possible to use pilot symbols during transmission, as described hereafter.

A second class of receivers consists of non-coherent receivers, that is those not requiring the information on the absolute phase of the transmitted signal. These receivers have different advantages compared to pseudo coherent receivers, namely:

1. They can be employed in situations where the synchronization recovery results to be difficult, such as for instance in the case of fading channels, or in presence of shift Doppler, or of frequency jumps due to the instability of oscillators;
2. They are simpler and cost effective since they have no PLL;
3. The synchronization state is not lost, contrarily to receivers with PLL where this loss can occur due to phase jumps, false locking or loss of the locking state;
4. after an out-of-duty interval caused by deep fading they are immediately operative, contrarily to receivers with PLL that require a transient period to recover the locking condition;
5. they can be employed in time division multiple access communication systems (Time Division Multiple Access, or TDMA), where the coherent detection is not recommended due to the comparatively long acquisition time of the synchronism.

The first non-coherent receivers considered in technical literature were differential receivers, often employed in the detection of modulated phase digital signals, or PSK (Phase Shift Keying), where a differential coding ties the information to the phase difference between two consecutive PSK symbols. The receiver estimates this phase difference, not requiring therefore to be locked in phase with the signal received. A possible interpretation of the operation of these receivers is the following: with the differential coding process, the phase reference necessary for the data estimate is contained in the preceding symbol. Therefore it is not necessary to determine an absolute phase reference, since the preceding symbol can be used to this purpose. However, this involves a degrade of performance compared to a coherent receiver, due to the fact that in differential detection the phase reference is noisy, while in the coherent detection this reference is perfectly known and therefore noise free. We could say that in the case of differential detection the SNR (Signal-to-Noise Ratio) of the reference signal is the same of the SNR of the information signal. In the case of a coherent receiver, on the contrary, the SNR of the reference signal is infinite from the theoretical point of view. For instance, in the case of PSK modulations with two phase values only or BPSK (Binary PSK) the loss is small, that is 0,8 dB approximately at BER (Bit Error Rate) of $10^{-5}$. On the contrary, in the case of PSK modulations with M > 2 phase values, or M-PSK, the performance loss can reach 3 dB.

Starting from the above considerations, differential receivers have been conceived, drawing the phase reference from a given number of past symbols, in order to "filter" the noise effect. In this way the SNR of the phase reference changes to a higher quality and the performance come closer to those of a coherent receiver. This type of receivers employing a so-called «decision reaction» are described, for instance in the following papers:

- «The phase of a vector perturbed by Gaussian noise and differentially coherent receivers», authors: H. Leib, S. Pasupathy, published on IEEE Trans. Inform. Theory, vol. 34, pp.1491-1501, November 1988.
- «Bit error rate of binary and quaternary DPSK signals with multiple differential feedback detection», author F. Edbauer, published on IEEE Trans. Commun., vol. 40, pp. 457-460, March 1992.

They can be considered the forerunners of block differential receivers, or N-differential, described below.

Block differential receivers fill the performance gap between coherent performance and simply differential ones, and are well described in the following papers:

- «Multi-symbol detection of M-DPSK", authors: G. Wilson, J. Freebersyser and C. Marshall, published following the Proceedings of IEEE GLOBECOM, pp.1692-1697, November 1989;
- «Multiple-symbol differential detection of MPSK», authors: D. Divsalar and M. K. Simon, published on IEEE Trans. Commun., vol. 38, pp.300-308, March 1990;
- «Non-coherent block demodulation of PSK", authors: H. Leib, S. Pasupathy, published following the Proceedings of IEEE VTC, pp.407-411, May 1990;
- and in the volume under the title «Digital communication techniques», authors: M. K. Simon, S. M. Hinedi and W. C. Lindsey, published by Prentice Hall, Englewood Cliffs, 1995, for the case of M-PSK modulations.

Block differential receivers, as well as those adopting the «decision reaction», are grounded on the idea to extend the observation interval on which decisions are based, compared to the observation interval of two symbols only, typical of simply differential receivers. For these last, there is an additional peculiarity, which is that to decide on more symbols at the same time, instead of symbol by symbol. N-differential receivers use an observation window of N symbols, and simultaneously make the decision on N-1 information symbols. This decision strategy can be seen as an extension of the decision strategy of differential receivers, which in fact correspond to case N = 2. It has been demonstrated that in the case of M-PSK modulations, for N → +∞ the performance of this type of receivers tend to those of the coherent receiver. Number of examples of block differential receivers can be found in literature, suitable to the different modulations; some of them are described in the papers mentioned above. In addition, we point out that:

- M-PSK modulations with channel coding are described in the paper under the title «The performance of trellis-coded MDPSK with multiple symbol detection", authors: D. Divsalar, M. K. Simon and M. Shahshahani, published on IEEE Trans. Commun., vol. 38, pp.1391-1403, September 1990;
- M-QAM coded and uncoded modulations (Quadrant Amplitude Modulation) are dealt with in the essay «Maximum-likelihood differential detection of uncoded and trellis coded amplitude phase modulation over AWGN and fading channels - metrics and performance", authors: D. Divsalar and M. K. Simon, published on IEEE Trans. Commun., vol. 42, pp.76-89, January 1994;
- M-PSK and M-QAM modulations in fading channels, are treated in the previous article and in the one under the title «Optimal decoding of coded PSK and QAM signals in correlated fast fading channels and AWGN: a combined envelope, multiple differential and coherent detection approach", authors: D. Makrakis, P. T. Mathiopoulos and D. P. Bouras, published on IEEE Trans. Commun., vol. 42, pp.63-75, January 1994.

Some disadvantage, common to all the block differential or N-differential receivers, described in the extensive literature mentioned above, are caused by the type of strategy used in the decision, consisting in an exhaustive research made on the single data blocks. Therefore it is necessary to use small N values, otherwise calculations would exceedingly complicate even for small sizes of the input alphabet, practically impairing the realization of the receivers. To overcome this difficulty, the skilled in the art could think to estimate the sequence transmitted using the Viterbi algorithm, however he should come shortly to the conclusion that this way is not practicable since the metric can be made recurrent in no one of the receivers described. In the light of the above, some N-differential receivers are known, employing, though inappropriately, the Viterbi algorithm. In the case of M-PSK modulations, these receivers have been, described in the following articles:

- «Non-coherent coded modulation", author D. Raphaeli, published on IEEE Trans. Commun., vol. 44, pp.172-183, February 1996;
- «A Viterbi-type algorithm for efficient estimation of M-PSK sequences over the Gaussian channel with unknown carrier phase", authors: P. Y. Kam and P. Sinha, published on IEEE Trans. Commun., vol. 43, pp.2429-2433, September 1995.

Non-coherent receivers described by D. Raphaeli, representing the more pertinent known art, are based on maximally overlapped observations, that is extended to N-1 symbols preceding the present one, assumed as independent, even if they are not in reality, as the author clearly admits. We can also observe that metrics used are identical to those euristically assigned to the most recent symbols in the receivers described by P. Y. Kam and P. Sinha, where decisions are locally made, at each node of a trellis diagram. In this case there is no accumulation of metrics as, on the contrary, it occurs in the classical Viterbi algorithm. The interesting thing to be noticed in receivers described by D. Raphaeli is that they reach a good operation performance, though inappropriately using the Viterbi algorithm. The approximation introduced, consists in having in a recurrent way, the metrics of the previous N-differential block receivers to the sole purpose of employing the Viterbi algorithm, but without basing the assumptions on metrics and their use in the algorithm context, on effective and convincing theoretical postulates, justifying this recurrence relation. The performance of these receivers, while good, finds however a limit in the approximation introduced.

Object of the Invention

Therefore object of the present invention is to additionally improve the performance of the known non-coherent receivers, at equal complexity level, or to reduce the complexity, at equal performance, and to indicate a non-coherent reception method of sequences of information symbos transmitted on a communication channel, affected by AWGN noise, based on a more effective use of the Viterbi algorithm for the maximum likelihood estimation of the sequence transmitted.

Summary of the Invention

The invention achieves said object by providing a non-coherent reception method of sequences of information symbols, as described in the independent claim 1.

Other object of the invention is a non-coherent receiver implementing the method of claim 1, as described in the independent claim 10.

The method of the invention indicates the way to obtain an expression of the branch metric of the non-coherent receiver making the calculation of path metric recurrent and perfectly compatible with the theoretical assumptions of the Viterbi algorithm, contrarily to what took place for the conventional non-coherent receivers. This new and original result is possible starting from the expression of the branch metric of the optimum coherent receiver, which is compatible with Viterbi, and replacing a phasor $e^{-j\theta}$ included in the latter expression (which is of course unknown to the non-coherent receiver) by its estimate based on the observation at the instant n of N-1 samples preceding the actual one. To avail of the correct data sequence without a dangerous delay the «Per-Survivor Processing" technique (PSP) described in the article: «Per-survivor processing: a general approach to MLSE in uncertain environments", authors: R. Raheli, A. Polydoros and C. K. Tzou, published on IEEE Trans. Commun., vol. 43, pp.354-364, February/March/April 1995 is used. The modifications of the initial expression of the branch metric of the coherent receiver made according to the instructions of the PSP technique removes the ideal character from the final metric expression characterizing the present invention. It must be pointed out that the final metric expression is not the result of a mere application of the known PSP technique, but a combination of different operational steps founded on the fact to use the expression of the branch metric of the optimum coherent receiver to obtain a similar expression valid for the non-coherent receiver. In the opinion of the applicant, nothing similar was seen until now, nor the teaching of the present invention could be obvious to the skilled in the art, whose knowledge is well represented by the various papers mentioned herein. A communication channel without intersymbol interference is the assumption at the base of the branch metric expression of the optimum coherent receiver, which is inevitably transferred to the expression of the branch metric of the non-coherent receiver for the way it has been obtained. In the practice, this situation occurs with a good approximation in the channels made of low or medium capacity radio links, or in satellite connections. The expression of the branch metric of the non-coherent receiver obtained by the method of the invention is absolutely general as for the type of coding, in the practice a commonly adopted coding is the differential one.

Brief Description of the Drawings

Additional purposes and advantages of the present invention will result more clear from the following detailed description of an implementation of the same and from the attached drawings given as not limiting example, where:

- Fig.1 shows an equivalent model in base band of a generic digital communication system including a RIC receiver implementing the method of the present invention;
- Fig.2 shows a block diagram valid to describe the operation of the RIC receiver of fig.1 in the case of linear modulations;

- Fig.3 shows a block diagram valid to describe the operation of the METRICTOT block of fig.2;
- Fig.4 shows a block diagram valid to describe the operation of a METRIC(s) generic block of fig.3;
- Fig.5 shows the implementation of the coding block COD of fig.1, in case it represents a convolutional coder for multilayer symbols of the M-PSK type;
- Figures 6 and 7 represent two different implementations of the coding block COD of fig.1 for two different code typologies, and

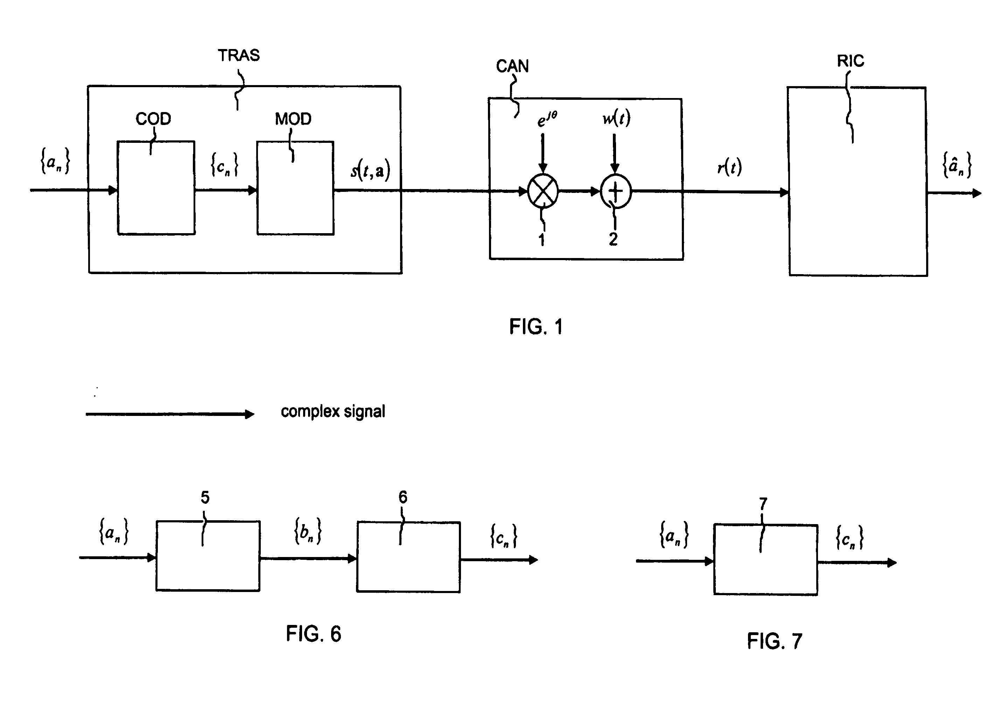

Making reference to fig.1, it can be noticed a transmitter TRAS connected to a receiver RIC through a communication channel CAN, that is considered linear and affected by AWGN noise with power spectrum density $N_o/2$. Channel CAN in the figure is modelled by the cascade of a multiplier 1 and an adder 2. At 1/T time intervals the input of the transmitter TRAS is reached by digital information symbols belonging to a cardinal alphabet M'. The symbols, assumed to be equiprobable and independent, form a sequence a = $\{a_n\}$ reaching the input of a coder COD which, through some coding rule, generates at output a sequence of coded symbols, c = $\{c_n\}$, in general complex and belonging to an alphabet with M ≥ M' cardinality. Notice that being the block diagram of Fig.1 an equivalent in base band of the communication system, the signals are appearing as actually complex envelopes. The coded sequence $\{c_n\}$ reaches the input of a linear modulator MOD, mapping the sequence in a continuous time signal $s(t, \textbf{a})$. This signal shall depend of course on the sequence of information symbols briefly indicated by vector a. The transmission signal $s(t, \textbf{a})$ coming out from the modulator MOD crosses the transmission means used by the communication channel CAN and reaches a non-coherent receiver RIC. It receives at its input a signal $r(t)$ and gives at the output an estimate $\{â_n\}$ of the transmitted information sequence $\{\textbf{a}_n\}$. During the channel crossing the pulses of the transmission signal $s(t, a)$ undergo a global phase rotation θ. The multiplier 1, to the second input of which a phasor $e^{j\theta}$ is applied, considers this phase rotation. The adder 2 adds to the transmission signal coming out from the multiplier 1 the complex envelope $w(t)$ of the noise present on the channel. For what said above, the signal received $r(t)$ assumes the following expression:

$$r(t) = s(t,\text{a})e^{j\vartheta} + w(t) \tag{0.1}$$

where the phase rotation θ is assumed as constant for the whole transmission time and modelled as uncertain variable with uniform distribution in the interval [0,2π] and $s(t, \textbf{a})$ denotes the response of the channel..

The schematisation of Fig.1 is purposely generic, since its sole purpose is to introduce the basic elements of the channel upstream the non-coherent receiver RIC, where the invention actually resides. Time by time, according to the particular receiver considered, the typologies of COD and MOD blocks shall be specified..for linear modulations $M$-PSK and $M$-QAM of signals transmitted on an ideal channel. In the Figure we have neglected the blocks not considered absolutely necessary to the understanding of the operation, known to the skilled in the art.

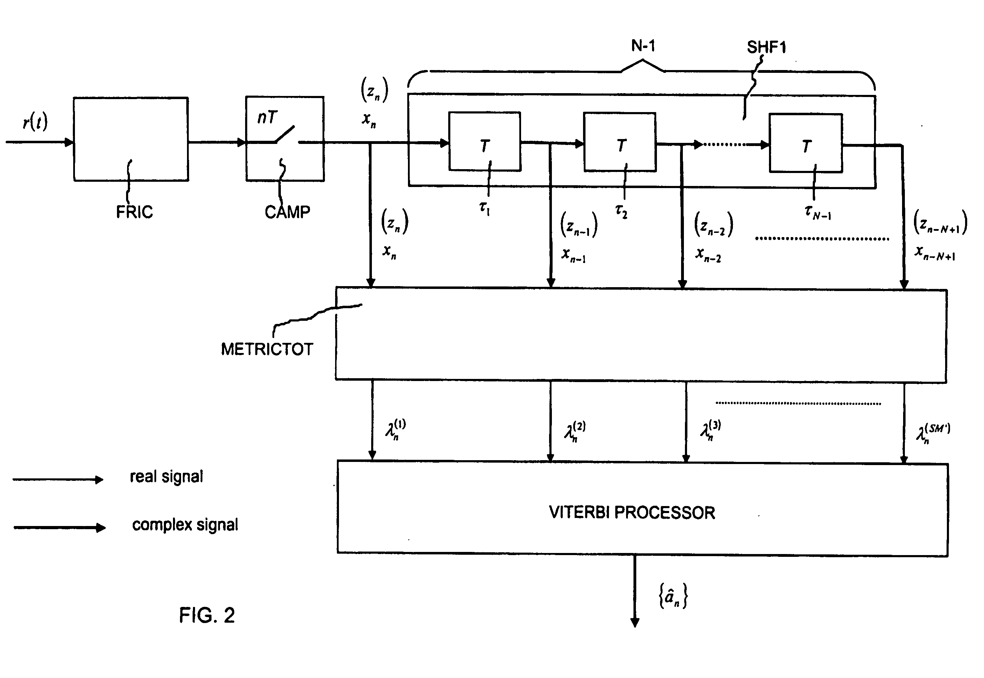

Making reference to Fig.2, we shall now describe the block RIC in presence of linear modulations and channel supposed as ideal. In this case the signal $s(t,\textbf{a})$ will assume the following expression:

$$s(t, \mathbf{a}) = \sum_i c_i h(t - iT) \tag{0.2}$$

where $T$ is the symbol interval and $h(t)$ is the pulse transmitted, duly normalized.

In the assumption to perfectly know the symbol synchronism and the carrier frequency, the signal $r(t)$ can then be expressed as follows:

$$r(t) = \sum_i c_i h(t - iT)e^{j\vartheta} + w(t) \tag{1}$$

This signal reaches the input of a reception filter FRIC, downstream which a sampler CAMP is placed, withdrawing the samples $x_n$ with cadence equal to the symbol frequency $1 / T$. The samples $x_n$ form a sequence $\{x_n\}$ sent to a chain of $N - 1$ delay elements $\tau_1, \tau_2, \cdots, \tau_{N-1}$ of a symbol interval $T$. These elements r are the flip-flops of a shift register SHF1 storing a string of $N - 1$ said samples of the filtered signal for the duration of a symbol, making them at the same time available at the output of each single flip-flop τ. The sample $x_n$ and the $N - 1$ preceding samples $x_{n-1}$, $x_{n-2}, \cdots, x_{n-N+1}$ are sent to a METRICTOT block performing, in correspondence, the calculation of appropriate expressions called «transition metrics», or «branch metrics», indicated in the Figure with $\lambda_n^{(1)}, \lambda_n^{(2)}, \lambda_n^{(3)}, ..., \lambda_n^{(SM')}$. Said branch metrics reach the inputs of a block called Viterbi Processor, known to the skilled in the art, giving at output the estimated

sequence $\{\hat{a}_n\}$. How this takes place in presence of a signal $r(t)$ given by the (1) where $c_i$, symbols appear, shall be explained describing some actual coding cases. Notice in the Figure, that complex quantities are indicated with line arrows thicker than those used for real quantities.

The FRIC filter is matched to the real pulse transmitted $h(t)$, of known trend, is a filter with response to pulse $h(-t)$. In general an impulse $h(t)$ is used for which the pulse coming out from the adapted filter meets the Nyquist condition of intersymbol interference absence, that is such that:

$$\int_{-\infty}^{\infty} h(t - iT)h(t - kT)dt = \begin{cases} 1 & \text{for } k = i \\ 0 & \text{otherwise} \end{cases} \tag{2}$$

The selection of a FRIC filter with raised cosine root frequency response, likewise the transmission filter FTRAS, involves an optimum filtering during receipt and the matching of the (2). Therefore samples $x_n$ can be expressed as:

$$x_n \stackrel{\Delta}{=} r(t) \otimes h(-t)\big|_{t=nT} \tag{3}$$

where the symbol $\otimes$ represents the convolution operator, and recalling the (1) and (2):

$$x_n = c_n e^{j\theta} + \eta_n \tag{3'}$$

having indicated with:

$$\eta_n = \int_{-\infty}^{\infty} w(t)h(t - nT)dt \tag{4}$$

the noise samples filtered by the FRIC filter. As in the case of known phase, the samples $x_n$ represent a sufficient statistic (that is their sequence includes the whole information associated to the corresponding continuous signal), and shall be indicated hereafter by the term «observable».

Concerning the operation of the RIC receiver of Fig.2, it is only necessary to describe the nature of the METRICTOT block, since the implementation of the Viterbi Processor block is known to the skilled in the art, saying first that the algorithm there developed searches the path according to maximum accumulated branch metric on a sequential diagram, called also trellis, having S states represented as many nodes on a line perpendicular to the axis of time and identically repeating it at each time symbol, where M' branches start from each node and reach as many successive nodes, each branch being characterized by its own metric, representing the probability associated to the occurrence of the specific transition among subsequent states of the trellis. Useful terminology related to the Viterbi algorithm is the following:

- branch metric and transition metric are synonyms explained just above;
- path on the trellis is a sequence of branches starting from a node and terminating in another node generally more time symbol apart;
- a path metric value is achieved summing up branch metric values along a path;
- cumulative metric is synonym of path metric.

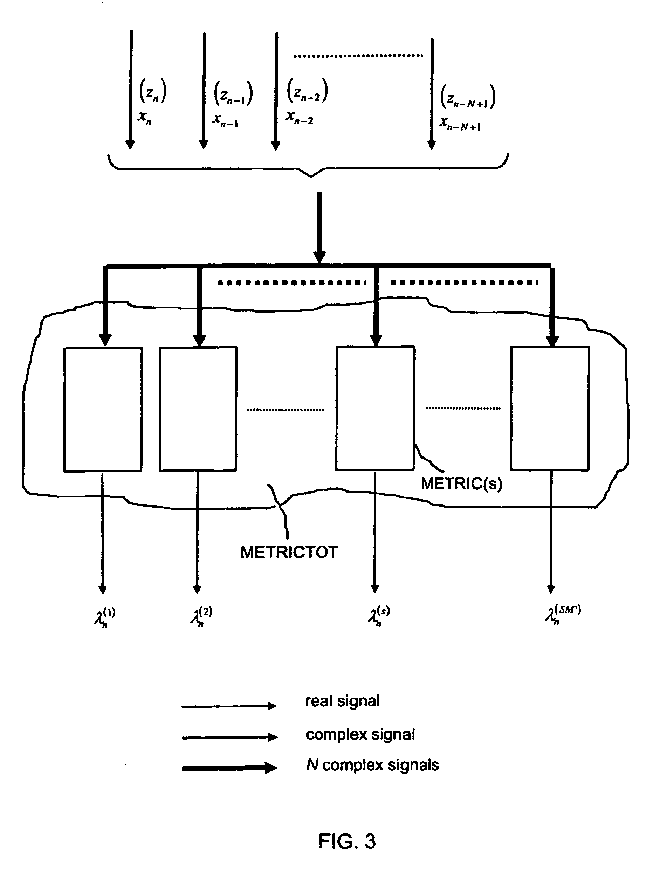

The structure of the METRICTOT block is better detailed in Fig.3, where SM' identical blocks METRIC(s) at N inputs for samples $x_{n-1}, x_{n-2}, \cdots, x_{n-N+1}$ can be noticed and, at an output for a relevant branch metric $\lambda^{(s)}$. The single METRIC(s) blocks work all in parallel and differ only for the content of storage internal elements containing the coded symbols $\tilde{c}_n, \tilde{c}_{n-1}, \ldots, \tilde{c}_{n-N+1}$ univocally associated to the particular branch of the trellis of which the relevant METRIC(s) block calculated the metric $\lambda^{(s)}$.

In the RIC non-coherent receiver of the example, the analytical expression for the calculation of the branch metrics $\lambda^{(s)}_n$ is obtained starting from the analytical expression of the metrics calculated by the coherent receiver. This last, assuming the ideal channel and the «optimum» global filtering, selects the code sequence that maximises the sum of branch metrics having the following expression:

$$\mathrm{Re}\left\{x_n \widetilde{c}_n^* e^{-j\theta}\right\} - \frac{1}{2}\left|\widetilde{c}_n\right|^2 \qquad (5)$$

where Re{.} indicates the real portion of a complex number {.}; $\widetilde{c}_n$ are coded symbols univocally associated to the generic branch of the trellis at the discrete n-th instant, the asterisk * indicating the total conjugate value of $\widetilde{c}_n$; and $\theta$ is the known phase of the modulated carrier. The different passages leading to the (5) are shown in the volume under the title «Digital communications», author J. Proakis, published by McGraw-Hill, New York 1989.

In the (5), the phasor $e^{-j\theta}$ is of course unknown to the non-coherent receiver RIC, however in the implementation of the RIC receiver according to the present invention the (5) is used, replacing said phasor by its estimate based on the observation at the instant n, of N-1 samples preceding $x_n$, according to the relation:

$$\widehat{e^{-j\theta}} = \frac{\sum_{i=1}^{N-1} x_{n-i}^* c_{n-i}}{\left|\sum_{i=1}^{N-1} x_{n-i}^* c_{n-i}\right|} \qquad (6)$$

where the symbol

$$\widehat{e^{-j\theta}}$$

represents said estimate of the phasor, to obtain which, the N - 1 samples $x_n$, differing from those bearing the same name in the (5) due to the fact they have been obtained through non-coherent conversion in base band of the signal received, are stored to the purpose in a phase construction memory represented by the shift register SHF1 of Fig.2.

Said estimate could replace the phasor $e^{-j\theta}$ in the (5), whenever data $\widetilde{c}_n, \widetilde{c}_{n-1}, ..., \widetilde{c}_{n-N+1}$ already «decided» by the Viterbi processor are known, while the (6) contains data $c_n, c_{n-1}, ..., c_{n-N+1}$ transmitted and therefore not yet known. The estimate of these last is furnished by the Viterbi Processor with an inevitable delay, which would consequently involve at the discrete n-th instant an incorrect value of the phasor $e^{-j\theta}$, and therefore unusable in the (5). The aforementioned PSP technique is suitable to solve the problem to avail of the correct data sequence. Through this technique the Viterbi algorithm can be used in presence of an unknown parameter, in this case the phase $\theta$, which if known, could be advantageously used in the expression of the branch metric. The measure consists in using the above mentioned parameter in the expression of the branch metric, estimated according to a sequence of samples $x_{n-1}, ..., x_{n-N+1}$ of the signal r(t), filtered by FRIC, and of a generic sequence of data $\widetilde{c}_n, \widetilde{c}_{n-1}, ..., \widetilde{c}_{n-N+1}$.

Operating as above the following analytical expression is obtained for the calculation of branch metrics $\lambda_n$ of the RIC receiver:

$$\lambda_n = \frac{\mathrm{Re}\left\{\sum_{i=1}^{N-1} x_n x_{n-i}^* \widetilde{c}_n^* \widetilde{c}_{n-i}\right\}}{\left|\sum_{i=1}^{N-1} x_{n-i}^* \widetilde{c}_{n-i}\right|} - \frac{\left|\widetilde{c}_n\right|^2}{2} \qquad (7)$$

where $\widetilde{c}_n, \widetilde{c}_{n-1}, ..., \widetilde{c}_{n-N+1}$ are the coded symbols univocally associated to the generic branch of the trellis at the discrete n-th instant, and $x_{n-1}, x_{n-2}, ..., x_{n-N+1}$ are $N$ sequential samples of the signal received, non-coherently converted in base band and optimally filtered. As it can be noticed from the (7), due to estimate (6), the phase $\theta$ does no more explicitly appear in the expression of the metric. In a manner completely equivalent to the concepts described above, we can say that the estimate of the phase reference implemented in PSP mode is «aided by data», since for each path survived to the instant n, the N-1 data relevant to its previous history are used. In the hypothesis not to discretionary reduce the number of states of the trellis, when transition metrics $\lambda_n^{(s)}$ are calculated at the instant n and the same are accumulated to select the survivors, the particular sequences $\tilde{c}_n, \tilde{c}_{n-1}, ..., \tilde{c}_{n-N+1}$ stored in the relevant METRIC(s) blocks of Fig.3 used for the calculation of said metrics, correspond also to the $N$-1 data relevant to the previous history of those survivors. In consequence of the above, the estimate (6) of phasor $e^{-j\theta}$ in PSP modality does not involve any variation in the traditional application of the Viterbi algorithm, thus justifying what said above on full compatibility.

Of course the length $N$ of the phase construction memory is the result of a compromise between the need to make a more accurate estimate of the phasor present in the (5), the accuracy increasing as $N$ increases, and that, not to excessively expand the size of the trellis of the non-coherent receiver RIC, in respect with the trellis of the coherent receiver used as starting point for the calculation of the metrics, this last being of course without phase construction memory.

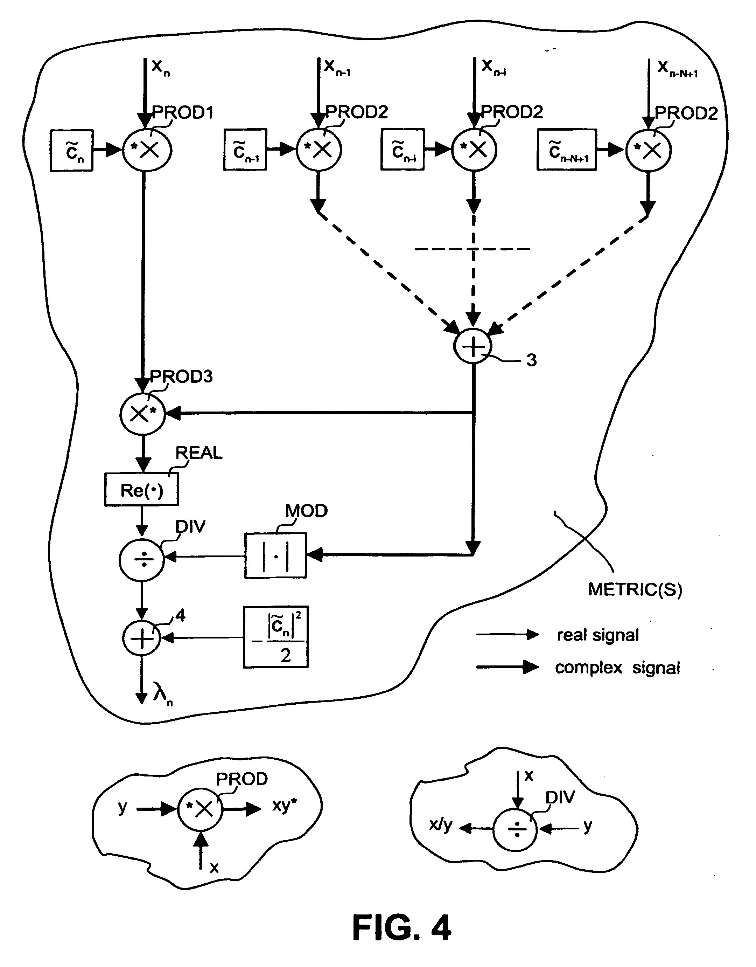

Making reference to Fig.4 it is now better detailed the structure of the generic block METRIC(s) of Fig.3, which calculates the branch metric $\lambda_n^{(s)}$ calculated using the expression (7). For a better reading of the diagram shown, arrows of different thickness are indicated in the Figure, associated to real or complex quantities. The Figure also shows at bottom the PROD and DIV generic blocks with the indication of the relevant operations accomplished. In particular the PROD block makes the product of the values at its inputs after having conjugated the value at input marked with *, and the DIV block makes the quotient between the values at its inputs. As it can be noticed, the generic samples $x_n$ $x_{n-1}, ..., x_{n-N+1}$ reach a first input of relevant multiplication blocks, namely PROD1 for $x_n$ and N-1 PROD2 blocks for the remaining samples, at the second input of which arrive the corresponding coded symbols present in a memory of the METRIC(s) block, namely $\tilde{c}_n$ for PROD1 and $\tilde{c}_{n-1}, ..., \tilde{c}_{n-N+1}$ for the N-1 PROD2 blocks. Except for a first product $x_n \tilde{c}_n$, all the remaining products $x_{n-1}\tilde{c}_{n-i}^*$ are sent to a same number of inputs of an adder 3, whose outgoing sum is sent to a first input of an additional multiplication block PROD3, at the second input of which arrives the first product $x_n\tilde{c}_n$. The product coming out from the last multiplier PROD3 is sent to a REAL block that extracts the real part and sends it to a first input of a divider block DIV, at the second input of which arrives a value coming out from a MOD block. The input of the MOD block is reached by the sum coming out from the adder, of which the MOD block extracts the module and makes it available at output. The quotient coming out from the DIV block is sent to a first input of an adder 4, at the second input of which the value

$$- \frac{|\tilde{c}_n|^2}{2}$$

arrives, obtained from the stored coded symbol $\tilde{c}_n$. The real value coming out from the adder 4 is the branch metric $\lambda_n^{(s)}$ calculated by the METRIC(s) block.

It is now described the development of the (7) through the configuration of the blocks of Fig.4. First of all, the PROD1 block calculates the product $x_n\tilde{c}_n^*$ and each cascaded PROD2 block calculates a product $x_{n-i}\tilde{c}_{n-i}^*$, afterwards the adder 3 calculates the term

$$\sum_{i=1}^{N-1} x_{n-i}\tilde{c}_{n-i}^* \ ,$$

of which the MOD block subsequently calculates the module. The module just calculated could also be used in the (7) as divider, since the following relation is valid:

$$\left| \sum_{i=1}^{N-1} x_{n-i}\tilde{c}_{n-i}^* \right| \ = \ \left| \sum_{i=1}^{N-1} x_{n-i}^* \tilde{c}_{n-i} \right|.$$

The term

$$\sum_{i=1}^{N-1} x_{n-i}\widetilde{c}_{n-i}^{\bullet}$$

is also conjugated and then multiplied by $x_n\widetilde{c}_n^{\bullet}$. From the product result, the real part is extracted, which divided by

$$\left|\sum_{i=1}^{N-1} x_{n-i}^{\bullet}\widetilde{c}_{n-i}\right|$$

and summed to

$$-\frac{\left|\widetilde{c}_n\right|^2}{2},$$

forms the branch metric $\lambda_n^{(s)}$

Concerning the particular coding of information symbols $\{a_n\}$ in coded symbols $\{c_n\}$ the maximum general character has been maintained up to now. We shall now illustrate some applications of the (7) in different coding conditions pertaining to the practical cases of larger use, highlighting additional inconveniences of the known art. The cases examined in detail are the following:

A) Non-coherent sequence estimation receiver for signals with $M$-PSK modulation, transmitted together with pilot symbols as an alternative to differential coding.
B) Non-coherent sequence estimation receiver for signals with $M$-PSK modulation and differential coding ($M$-DPSK); the same receiver where the maximum likelihood sequence estimation receiver takes place according to a simplified method is considered as sub-case.
C) Non-coherent sequence estimation receiver for signals with M-PSK modulation and channel convolutional coding.
D) Non-coherent sequence estimation receiver for signals with M-QAM modulation and quadrant differential coding (M-DQAM).

Additional cases not specified, for instance the use of a TCM coding (Trellis Coded Modulation), can be easily drawn from examples A), B), C), and D) that shall be now described.

In the introduction, we said that non-coherent receivers presuppose the use of a differential coding during transmission, due to the practical difficulty in the recovery of an absolute phase recovery. However, this statement is not binding since, as it is known, as an alternative to the differential coding, the above mentioned recovery can be made through periodical introduction of one or more pilot symbols known to the receiver in the information symbol sequence transmitted, every P of said symbols.

In the cases A), B) and C) the symbols $\{c_n\}$ belong to the $M$-PSK alphabet, therefore the generic symbol transmitted can be expressed as $c_n = e^{j\phi_n}$, where

$$\phi_n \in \left\{\frac{2\pi m}{M};\ m = 0, 1, \ldots, M-1\right\},$$

with M cardinality of the alphabet. In the above mentioned cases the branch metric (7) can be simplified, in fact, being $|c_n| = 1$, it is possible to define said branch metrics as:

$$\lambda_n = \frac{\mathrm{Re}\left\{\displaystyle\sum_{i=1}^{N-1} x_n x_{n-i}^{\bullet} \widetilde{c}_n^{\bullet} \widetilde{c}_{n-i}\right\}}{\left|\displaystyle\sum_{i=1}^{N-1} x_{n-i}^{\bullet} \widetilde{c}_{n-i}\right|} \tag{8}$$

since the term -1/2 appears in the same way in all the branches of the trellis. It has also been verified that neglecting the denominator, an improvement of the RIC receiver performance is obtained, in this case the (8) becomes:

$$\lambda_n = \mathrm{Re}\left\{\sum_{i=1}^{N-1} x_n x_{n-i}^{\bullet} \widetilde{c}_n^{\bullet} \widetilde{c}_{n-i}\right\} \tag{9}$$

Using the (9), the structure of the METRIC(s) block of Fig.4 of course can be simplified, in fact it is possible to directly obtain the branch metric $\lambda_n^{(s)}$ at the output of the REAL block, thus eliminating the surplus blocks MOD, DIV, and the adder 4.

In the receiver of case A) symbols $c_n$ shall be intended as information symbols $a_n$ belonging to the *M*-PSK alphabet. The state of the trellis is defined as:

$$\sigma_n = \left(\widetilde{c}_{n-1}, \widetilde{c}_{n-2}, ..., \widetilde{c}_{n-N+1}\right) \tag{9'}$$

and the number of states is S = $M^{N-1}$, and therefore it exponentially increases with the phase construction memory. If at the instant n a pilot symbol is received, for instance $\chi$, the states compatible with the same are all of the type:

$$\sigma_n = \left(\chi, \widetilde{c}_{n-2}, ..., \widetilde{c}_{n-N+1}\right) \tag{9''}$$

that is only one fraction *1/M* of total states. In this case the Viterbi processor maintains only a fraction of the paths survived in the trellis, namely, only the survivors leading to the states (9") compatible with the known pilot symbol. From the realization point of view, when the pilot symbol is received, the cumulative metrics of survived paths that shall be eliminated, can be decreased of an appropriate quantity causing that all the considered paths, generated by said survivors, loose all the subsequent comparisons. In conclusion, the receiver of case A) exploits its knowledge in advance, that is the fact to know that at a given instant k the symbol $c_n = \chi$ could not be transmitted, to avoid to have survivors ending in states not compatible with the known pilot symbol, and therefore reduce the possibility to decide for a wrong sequence.

The operation performance of a receiver implemented according to the case A) of the description, with use of pilot symbols as an alternative to differential coding, have been compared with those of an ideal coherent receiver which of course does not require pilot symbols. From the comparison, it resulted that for a phase construction memory with $N$ = 4 and appropriate values of the cadence P of pilot symbols, the BER of the non-coherent receiver differs of max. 0,3 dB from that of the coherent receiver, for all the values considered of the signal-to-noise ratio.

It is now examined the case B) relevant to a non-coherent sequence estimation receiver for signals with *M*-PSK modulation and differential coding (*M*-DPSK). Symbols $c_n$ are supposed to come, through a differential coding $c_n = c_{n-1}a_n$, from a source of symbols $a_n$ equiprobable and independent, belonging to the *M*-PSK alphabet. Symbols $\widetilde{c}_n$ in the expression of branch metrics (9) can be expressed according to source symbols $\widetilde{a}_n$ as follows:

$$\widetilde{c}_n^{\bullet} \widetilde{c}_{n-i} = \prod_{m=0}^{i-1} \widetilde{a}_{n-m}^{\bullet} \tag{10}$$

which introduced in the (9) gives for $\lambda_n$ :

$$\lambda_n = \mathrm{Re}\left\{\sum_{i=1}^{N-1} x_n x_{n-i}^{\bullet} \prod_{m=0}^{i-1} \tilde{a}_{n-m}^{\bullet}\right\} \tag{11}$$

From the (11) we can notice how in the metric $\lambda_n$ the coded symbols $\tilde{c}_n$ do no more appear, therefore it is the Viterbi processor itself that without any modification in its operation mode, accomplishes also the differential, according to what shown in Fig.2. To obtain this, and as it results from the (11), we see that the state $\sigma_n$ of the trellis used by the Viterbi processor must be defined on information symbols as:

$$\sigma_n = \left(\tilde{a}_{n-1}, \tilde{a}_{n-2}, \ldots, \tilde{a}_{n-N+2}\right) \tag{12}$$

The number of states is S = $M^{N-2}$, whose exponential growth with $N$ can be reasonably confined using small $N$ values, because we observed that some performance can however be obtained, expressed through the BER, very close to those of a coherent receiver for signals with differential coding.

As sub-case B) it is described a non-coherent receiver with expression of the branch metric (11), differing from the previous one due to the fact that the maximum likelihood sequence estimation takes place according to a simplified method. Techniques are known in the invention application field enabling to reduce the number of states of the trellis on which the Viterbi processor operates. Generally, once the length of the phase construction memory is determined, a given number of information symbols will appear in the definition of the deriving state; now, using the above mentioned known complexity reduction techniques it is possible to define a reduced trellis where the state is tied to a lower number of information symbols, for instance neglecting the more remote symbols, or making a partitioning of the symbol set (set partitioning). The above mentioned techniques are, for example, described in the following articles:

- «Reduced-State Sequence Estimation (RSSE), with set partitioning and decision feedback», authors: M. V. Eyuboglu, S. U. H. Qureshi, published on IEEE Trans. Commun. , vol. 36, pp.13-20, January 1988;
- «Decoding of trellis-encoded signals in the presence of intersymbol interference and noise», authors: P.R. Chevillat and E. Eleftheriou, published on IEEE Trans. Commun., vol. 43, pp.354-364, July 1989.

The reduced complexity technique applied in the receiver of the present sub-case B) is of the RSSE type "reduced state sequence estimation". The "reduced" state is defined as $\sigma'_n$ = ( $\tilde{a}_{n-1}, \tilde{a}_{n-2}, \ldots, \tilde{a}_{n-Q+2}$ ), being the integer $Q$ ≤ $N$. In this way the number of states of the trellis diagram becomes $S = M^{Q-2}$. The remaining information symbols $a_{n-Q+1}, \ldots, a_{n-N+2}$ necessary to the estimate of the phasor $e^{-j\theta}$ according to (6), not included, or not completely specified in the definition of reduced state, are found in PSP mode from the previous history of each survivor. A similar approach is described in section IV.A of the mentioned article by R. Raheli, A. Polydoros and C. K. Tzou, of February/March/April 1995.

This technique (PSP) of reduction of the number of states, can be applied also to the previous case A) and to the subsequent cases C) and D).

The performance of the non-coherent receiver of case B), and relevant sub-case, have been evaluated for a 4-DPSK modulation (DQPSK, from Differential Quaternary PSK). Variable lengths of the phase construction memory have been considered and therefore, different complexity levels of the trellis. The receiver according to the present invention has higher performance, at equal $N$ value, compared to the $N$-differential receiver described in the article by Divsalar and M. K. Simon of March 1990. For $N$ = 2 both the receivers degenerate in the classical differential receiver, so their performances coincide.

It was also checked that the performance of the receiver considered tend, as $N$ increases, to those of a coherent receiver of the DQPSK type, with a rapidity not depending on the signal-to-noise ratio. This demonstrates that not only asymptotically, for high signal-to-noise ratios, but in general for each value of this ratio, the performance of a coherent receiver can be approximated as desired, provided that a sufficiently high $N$ value is chosen. This is true also when the complexity is appropriately reduced. For instance, it results that with a not excessive complexity (reduced to 16 states) the performance decrease is rather limited versus the coherent receiver (0,2 dB at a BER of $10^{-4}$). Therefore the receiver in subject, in the application referred to case B) is characterized by a insignificant loss compared to a coherent receiver, loss that in some applications can be lower than that due to an inaccurate estimation of the phase in the approximation of a coherent system through a pseudocoherent receiver.

It is now examined the case C) that concerns a non-coherent sequence estimation receiver for signals with

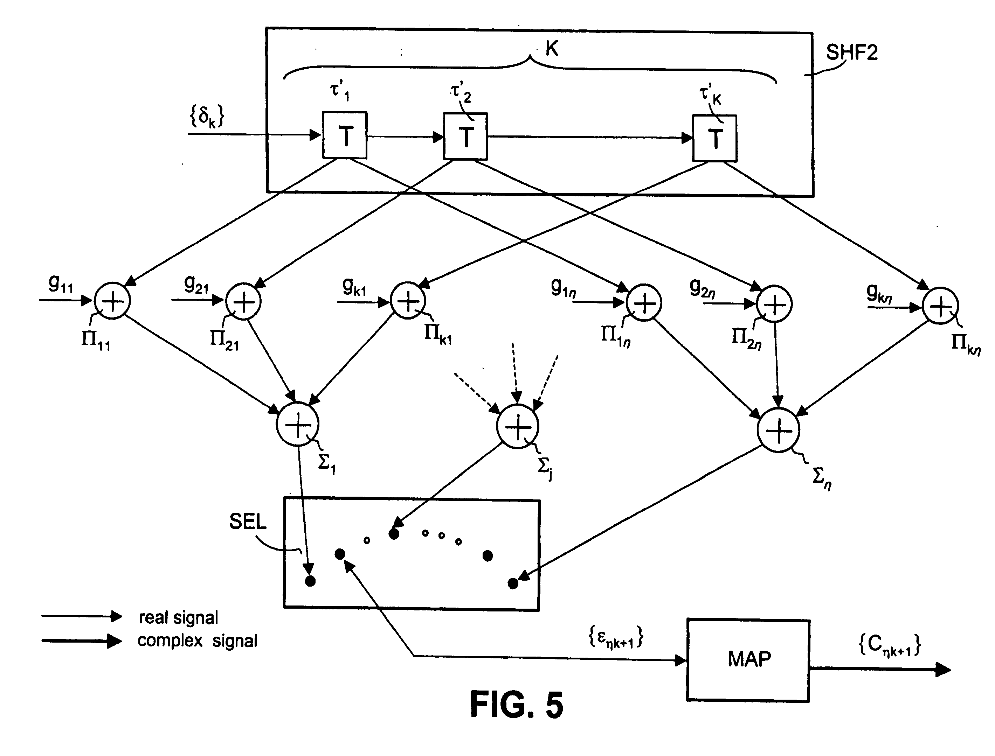

*M*-PSK modulation and channel convolutional coding. The following considerations are applicable to any type of channel coding, for instance to the TCM coding. To the purpose of better facilitate the comprehension of the structure and the operation of the receiver relevant to the case C), making reference to Fig.5, it is first shown a convolutional coder used in the TRAS transmitter of Fig.1 for the case considered. The structure of the coder is that described in the paper by D. Raphaeli of February 1996 mentioned above. At the input of the coder shown in the Figure, one can notice a sequence of information symbols $\{\delta_n\}$, with $1/T$ cadence, belonging to an alphabet $A = \{0, 1,..., M\text{-}1\}$. The sequence $\{\delta_n\}$ is sent to a chain of $K$ delay elements $\tau'_1, \tau'_2,...,\tau'_N$ of a symbol interval $T$. These elements $\tau'$ are the flip-flops of a shift register SHF2 storing a string of K said symbols for the whole duration of the symbol, making them available at the same time at the output of each single flip-flop $\tau'$. Each sample $\delta_k$ coming out from a relevant flip-flop $\tau'$ simultaneously reaches a first input of $\eta$ multipliers $\Pi_{ij}$ ; at the second input of said multipliers arrive the relevant constants $g_{ij} \in A$. From the above, the total number of multipliers $\Pi_{ij}$ will result $K\eta$, organized in $\eta$ groups of K multipliers each. Indexes *i* and *j* placed as deponent of elements $\Pi_{ij}$ and $g_{ij}$ indicate respectively the element *i* within the group of *K* elements, and a particular group j within the assembly of $\eta$ groups. The outputs of the *K* multipliers $\Pi_{ij}$, within each group j, reach the *K* inputs of a relevant adder $\Sigma_j$, module *M*. Each output of the $\eta$ adders $\Sigma_j$ reaches a relevant input of a selector SEL which, with cadence equal to $\eta$ times the symbol frequency $1/T$ , cyclically withdraws a sample at the selected input and sends it to a mapping block MAP. The samples coming out from the selector SEL form a sequence $\{\varepsilon_{\eta k+l}\}$ e A (I = 0, 1,..., $\eta$-1), which is mapped at the output by MAP in a corresponding complex sequence $\{c_{\eta k+l}\}$ of the *M*-PSK alphabet, as indicated in Figure by the different thickness of the arrows. The notation used herein foresees that the index k represents a time instant (discrete) synchronous with the information sequence and the index / defines each one of the $\eta$ coded symbols associated to each information symbol.

As for the operation of the coder in Fig.5, the value K represents the length of code limit, which is characterized by a number of states equal to $S_c = M^{K-1}$. The constants $g_{ij} \in A$, are organized in $\eta$ K-uple $\mathbf{g}_1 = (g_{11},....,g_{K1}) ... \mathbf{g}_\eta = (g_{1\eta},....,g_{K\eta})$, and form the code generators, having rate $1/\eta$. It is then possible to express the symbols $\varepsilon_{\eta k+l}$ coming out from the selector SEL as follows:

$$\varepsilon_{\eta k+l} = \sum_{m=1}^{K} g_{ml}\delta_{k-m} \tag{13}$$

where the summation has to be intended "module *M*". The mapping operation is made by the MAP block through the following relation:

$$c_{\eta k+l} = e^{j\frac{2\pi}{M}\varepsilon_{\eta k+l}}.$$

It is possible to define a relation between symbols $c_{\eta k+l}$ and the $a_n$ remembering that lacking the convolutional coding, the symbols $\delta_n$ should be mapped by the MAP block in symbols $a_n$ belonging to the *M-PSK* alphabet according to the relation:

$$a_n = e^{j\frac{2\pi}{M}\delta_k}$$

With adequate treatment of the previous expressions, we obtain:

$$c_{\eta n+l} = \prod_{m=1}^{K} a_{n-m}^{g_{ml}} \tag{14}$$

This assumed, the calculation of branch metrics concerning the receiver of the present case C) that employs the coder of Fig.5, can be made starting from the expression (9) of the branch metric for the similar receiver *M*-PSK, without channel coding. In the case of the present convolutional coding, the index *n* in (9) can be replaced by $\eta n + j$, where the new index *n* scans the information symbols, while the index *j* scans the $\eta$ coded symbols associated to the *n*-th information symbol. Also, the Viterbi algorithm operates on information symbols and therefore the contribution to the branch metrics relevant to the $\eta$ coded symbols corresponding to a same information symbol must be summed up.

Consequently, the branch metrics (9) become:

$$\lambda_n = \mathrm{Re}\left\{ \sum_{i=1}^{L-1} \sum_{j=0}^{\eta-1} \sum_{l=0}^{\eta-1} x_{\eta n+j} x_{\eta(n-i)+l}^{\bullet} \widetilde{c}_{\eta n+j}^{\bullet} \widetilde{c}_{\eta(n-i)+l} \right\} \tag{15}$$

where $L = N/\eta$ is assumed as integer. Using the (14) in (15) it is possible to express code symbols according to information symbols, obtaining:

$$\lambda_n = \mathrm{Re}\left\{ \sum_{i=1}^{L-1} \sum_{j=0}^{\eta-1} \sum_{l=0}^{\eta-1} x_{\eta n+j} x_{\eta(n-i)+l}^{\bullet} \left( \prod_{m=1}^{K} \widetilde{a}_{n-m}^{g_{mj}} \right)^{\bullet} \prod_{k=1}^{K} \widetilde{a}_{(n-i)-k}^{g_{kl}} \right\} \tag{16}$$

which is the expression of a branch metric for the receiver considered, whose trellis has a number of states $S = S_c M^{L-1}$, where $S_c = M^{K-1}$, and therefore $S = M^{L+K-2}$, having implicitly considered the case not requiring the introduction of a differential coding before the channel coder: this position shall be clarified hereafter. In the contrary instance the number of states is $S = S_c M^{L-2}$ due to reasons similar to those expressed in the calculation of the number of states of the receiver M-DPSK of case B). Since the trellis results rather complex, it can be the case to apply the described complexity reduction techniques.

Making reference to Figures 6 and 7, we shall now describe some known subjects, concerning in general the channel codes expressed by the coder COD of Fig.1; the purpose is that to determine the advantages for the receivers according to the invention, by comparison with conventional ones.

Two blocks 5 and 6 placed in cascade are shown in Fig.6, which represent a particular implementation of the coder COD included in the transmitter TRAS of Fig.1. The block 5 represents a differential coder, the input of which is reached by the sequence of information symbols $\mathbf{a} = \{a_n\}$, and a sequence of symbols $\mathbf{b} = \{b_n\}$ coded in differential mode is supplied at its output. The block 6 is a channel coder expressing a phase rotation invariant code of multiples of an angle $\phi$ sustained by vector $\mathbf{b}$ representing the sequence carrying the same name. At the output of block 6 the sequence $\mathbf{c} = \{c_n\}$ is present. Both the coders are of the known type. For the coder 6 the following property applies, that is described in the volume under the title "Introduction to trellis-coded modulation with applications", authors: E. Biglieri, D. Divsalar, P. J. McLane and M. K. Simon, published by Macmillan Publishing Company, 1991: if the coded sequence $\mathbf{c} = \{c_n\}$ corresponds to the sequence $\mathbf{b} = \{b_k\}$ of symbols at the input of the channel coder, the sequence $\mathbf{c}e^{jn\phi}$, with any $n$, is still a code sequence and corresponds to an input sequence $\mathbf{b}e^{jn\phi}$. This code behaviour, lacking appropriate countermeasures, could result catastrophic for the receiver, since it would prevent the decoding of starting symbols. The countermeasures which make possible to use the same a code of this type, consist in placing a differential coding on information symbols before the channel coding, as shown in Fig.6. In this case the sequences $\mathbf{b}$ and $\mathbf{b}e^{jn\phi}$ that are not discriminated by the decoder, are corresponding to a same information sequence $a = \{a_n\}$ through a differential coding, and the problem is thus solved. This enables to see how the cascade of the two blocks 5 and 6 of Fig. 6 behaves as a unique coder relevant to a code globally non-invariant to rotations, corresponding to the unique block 7 of Fig.7.

The implementation of the COD block of Fig.1 according to the setting of Fig.6 makes possible in the known art the use of a pseudocoherent receiver, which employs the metrics of the coherent receiver assuming as true the phase obtained making use of a PLL, because the reception is possible even if the PLL locks not to the true phase but to a phase differing from the same of a multiple of the angle $\phi$. In this case it is necessary to construct the trellis on the symbols $\{b_n\}$, except for the subsequent use of a differential decoder to obtain the decided symbols $\{a_n\}$. This double decoding passage can be avoided in the receivers of the subject invention. In fact, in presence of a rotation invariant code preceded by differential coding, the trellis is constructed not on the symbols $\{b_n\}$ but on information symbols $\{a_n\}$; in this way the Viterbi processor makes also the differential decoding. If one wants to proceed in a different way and construct the trellis on coded symbols $\widetilde{c}_n$, the same path metric would be associated to the input sequences which differ for a constant phase rotation, due to the fact that products of the type $\widetilde{c}_n^{\bullet} \widetilde{c}_{n-i}$ invariant to phase rotation appear in the branch metrics (7). Therefore, more maximum likelihood paths would be present on the trellis. Then, such a choice must be rejected.

An additional advantage that non-coherent receivers of the invention have, compared to the known art consisting of pseudocoherent receivers with PLL, is that to be able to freely use a channel code non invariant to phase rotations. In fact, as for the particular known art considered, we have just seen that the coder structure shown in Fig. 6 results binding, where the channel code is rotation invariant. On the other hand, a channel code non invariant to phase rotation (differently obtained from the cascade of blocks of Fig.6) would not enable the pseudocoherent receiver to neutralize the phase ambiguity introduced by the PLL. To overcome this serious disadvantage, the solutions known consist in giving a phase absolute reference to the receiver, for instance, using the pilot symbols mentioned above during transmission.

Concerning the non-coherent receiver of the present invention, a constant phase rotation of the carrier of any angle $\theta \in [0,2\pi]$ has no effect, considering that in the metrics of the receiver expressed in (7) appear products of the type $x_n x_{n-i}^*$ which delete the rotation $\theta$. Therefore, also a code non invariant to rotation can be used according to the diagram of Fig.7, without the need of using pilot symbols. However, this advantage is not exclusive of the receiver according to the present invention, but belongs to all non-coherent receivers.

The performance of the non-coherent receiver of the present case C has been compared to that of the receiver described in the article by D. Raphaeli of February 1996 mentioned above. The parameters selected to characterise both the receivers, foresaw the use of signals with QPSK modulation and convolutional coding, phase rotation not invariant, with $K = 3$ and $\eta = 2$ (and therefore $S_c = 16$). The code generators used to this purpose were: $\mathbf{g}_1 = (1, 3, 3)$ and $\mathbf{g}_2 = (2, 3, 1)$. A phase construction memory has been used in the receiver with $L = 4$. From the comparison it resulted that the receiver of the present case C) gains 0,3 dB in performance on BER, for any value considered of the signal-to-noise ratio, compared to the receiver of the known art, and loses only 0,2 dB compared to the optimum coherent receiver.

Finally, we describe the case D) relevant to a non-coherent sequence estimation receiver for signals with $M$-QAM modulation and differential coding ($M$-DQAM). For the following subjects, reference to Figures 1, 2, 3 and 4, still applies together with notions introduced describing the case B) relevant to a non-coherent sequence estimation receiver for signals with $M$-PSK modulation and differential coding ($M$-DPSK).

Concerning the receiver of the present case D), the symbols $c_n$ belonging to the $M$-QAM alphabet are supposed to be derived from information symbols $a_n$, of the same alphabet, equiprobable and independent, through a quadrant differential coding. A set belonging to the $M$-QAM set can be expressed as follows:

$$a_n = \mu_n p_n \tag{17}$$

where $\mu_n$ is the $a_n$ symbol multiplied by a phasor multiple of $\pi/2$ which brings it in the first quadrant of the complex plan, and $p_n$ belongs to the set QPSK $\{\pm 1, \pm j\}$; $p_n$ represents just the reverse of the subject phasor. The quadrant differential coding produces a coded symbol:

$$c_n = \mu_n q_n \tag{18}$$

with:

$$q_n = p_n q_{n-1} \tag{19}$$

which is in practice the usual differential coding for $M$-PSK modulations applied to symbols $p_n$ of a constellation QPSK. Branch metrics defined by the more general expression (7) can be expressed depending on information symbols $a_n$ in order that the Viterbi processor implements also the quadrant differential decoding. In particular, for (17), (18) and (19) we have:

$$\widetilde{c}_n^* \widetilde{c}_{n-i} = \widetilde{\mu}_n^* \mu_{n-i} \widetilde{q}_n^* \widetilde{q}_{n-i} = \widetilde{\mu}_n^* \widetilde{\mu}_{n-i} \prod_{m=0}^{i-1} \widetilde{p}_{n-m}^* = \widetilde{a}_n^* \widetilde{\mu}_{n-1} \prod_{m=1}^{i-1} \widetilde{p}_{n-m}^* \tag{20}$$

Multiplying the term

$$\left|\sum_{i=1}^{N-1} x_{n-i}^{\bullet} \widetilde{c}_{n-i}\right| \text{ by } \left|\widetilde{q}_n^{\bullet}\right| = 1$$

and considering that:

$$\widetilde{q}_n^{\bullet} \widetilde{c}_{n-i} = \widetilde{\mu}_{n-i} \widetilde{q}_{n-i} \widetilde{q}_n^{\bullet} = \widetilde{\mu}_{n-i} \widetilde{p}_n^{\bullet} \prod_{m=1}^{i-1} \widetilde{p}_{n-m}^{\bullet} \tag{21}$$

and also that

$$\left|\widetilde{c}_n\right| = \left|\widetilde{a}_n\right| = \left|\widetilde{\mu}_n\right|$$

we obtain from the (7):

$$\lambda_n = \frac{\mathrm{Re}\left\{\displaystyle\sum_{i=1}^{N-1} x_n x_{n-i}^{\bullet} \widetilde{a}_n^{\bullet} \widetilde{\mu}_{n-i} \prod_{m=1}^{i-1} \widetilde{p}_{n-m}^{\bullet}\right\}}{\left|\displaystyle\sum_{i=1}^{N-1} x_{n-i}^{\bullet} \widetilde{\mu}_{n-i} \widetilde{p}_n^{\bullet} \prod_{m=1}^{i-1} \widetilde{p}_{n-m}^{\bullet}\right|} - \frac{\left|\widetilde{a}_n\right|^2}{2} \tag{22}$$

Therefore a trellis diagram can be defined with state:

$$\sigma_n = \left(\widetilde{\mu}_{n-1}, \widetilde{\mu}_{n-2}, \ldots, \widetilde{\mu}_{n-N+1}, \widetilde{p}_{n-1}, \widetilde{p}_{n-2} \ldots, \widetilde{p}_{n-N+2}\right) = \\ = \left(\widetilde{a}_{n-1}, \widetilde{a}_{n-2}, \ldots, \widetilde{a}_{n-N+2}, \widetilde{\mu}_{n-N+1}\right) \tag{23}$$

and the number of states results S = $M^{N-1}/4$.

The performance of the non-coherent *M*-DQAM receiver of the present case D) have been compared with those of the receiver described in the paper by D. Divsalar and M. K. Simon of January 1994, mentioned above. From the comparison it resulted that the receiver in subject is characterized by a BER lower than that of the mentioned known art for any value considered of the signal-to-noise ratio, coming closer to the performance of the optimum coherent receiver with quadrant differential coding.

The digital hardware of the RIC receiver of Figures 1, 2, 3 for the cases considered A), B), C), and D) and possible receivers derived from the same, can be conveniently implemented through digital integrated circuits of the ASIC type *(Application Specific Integrated Circuit).* This implementation can be preferred in respect to the use of a mathematical microprocessor in the cases where the receiver must reach high operation speeds. The high operation speed that can be obtained, can be drawn in itself from the modularity of the METRICTOT structure shown in Fig.3, enabling the parallel processing of branch metrics.

## Claims

1. Method for the non-coherent reception of sequences of information symbols ($\{c_n\}$) obtained by digitally modulating the phase, or both the amplitude and the phase, of a carrier transmitted on a communication channel affected by Gaussian noise, including the steps of:

    - base band conversion of the received signal ($r(t)$), subsequent filtering by a filter (FRIC) matched to the transmitted pulse and sampling (CAMP) at symbol frequency, obtaining a sequence of complex samples ($\{x_n\}$);

- sequentially storing (SHF1) $N$-1 complex samples ($x_{n-1},...,x_{n-N+1}$) preceding a current complex sample ($x_n$);
- calculating (METRICTOT) for each current complex sample ($x_n$) the values of all branch metrics ($\lambda^{(s)}_n$) on a trellis sequential diagram whose branches represent the transitions among states defined by all possible $N$-1 subsequences of complex coded symbols ($\{\tilde{c}_n\}$);
- processing said branch metrics ($\lambda^{(s)}_n$) according to the Viterbi algorithm for obtaining the values of path metrics by summing up branch metric values on individual paths in the trellis and selecting a path having the maximum metric value to decide with maximum likelihood the sequence of transmitted symbols ($\{c_n\}$),

**characterized in that** the calculating step includes the following first steps for constructing a phase reference of the modulated carrier:

a) storing $N$ complex coded symbols ($\tilde{c}_n,...,\tilde{c}_{n-N+1}$) univocally associated to a relevant branch of the trellis at the nth discrete time instant;

b) summing up N-1 products between N-1 conjugated complex samples ($x_{n-1},...,x_{n-N+1}$) preceding the current complex sample ($x_n$) and N-1 corresponding complex coded symbols ($\tilde{c}_{n-1},...,\tilde{c}_{n-N+1}$) stored in the preceding step a);

c) calculating the module of the sum obtained in the preceding step b);

d) dividing the sum obtained in step a) by said module calculated in the preceding step c) obtaining said phase reference of the modulated carrier;

and the following second steps for calculating each value of said branch metrics ($\lambda^{(s)}_n$):

e) multiplying said phase reference by the current complex sample ($x_n$) and multiplying the result by the conjugated of the complex code symbol ($\tilde{c}_n$) corresponding to the current complex sample ($x_n$) and taking the real part;

f) calculating the square of the module of the complex code symbol ($\tilde{c}_n$) entering the preceding step e), dividing by two and subtracting from the result obtained at step e) obtaining an actual branch metric ($\lambda^{(s)}_n$) value.

2. Non-coherent reception method according to the preceding claim, **characterized in that** the general analytical expression of branch metrics $\lambda_n$ with the reconstructed phase reference is the following:

$$\lambda_n = \frac{\mathrm{Re}\left\{\sum_{i=1}^{N-1} x_n x^{\bullet}_{n-i} \tilde{c}^{\bullet}_n \tilde{c}_{n-i}\right\}}{\left|\sum_{i=1}^{N-1} x^{\bullet}_{n-i} \tilde{c}_{n-i}\right|} - \frac{|\tilde{c}_n|^2}{2}$$

where: ($\tilde{c}_{n-1},...,\tilde{c}_{n-N+1}$) are $N$ code symbols univocally associated to a relevant branch of the trellis; ($x_{n-1},...,x_{n-N+1}$) are $N$ sequential samples obtained filtering said converted signal ($r(t)$) through said filter (FRIC) matched to the transmitted pulse; the asterisk (*) denoting conjugate complex values.

3. Non-coherent reception method according to claim 1 or 2, **characterized in that** when said code symbols ($\{\tilde{c}_n\}$) correspond to $M$ discrete phase values of said modulated carrier, or $M$-PSK, the analytical expression of branch metrics with the reconstructed phase reference is the following:

$$\lambda_n = \mathrm{Re}\left\{\sum_{i=1}^{N-1} x_n x^{\bullet}_{n-i} \tilde{c}^{\bullet}_n \tilde{c}_{n-i}\right\}$$

where: $\lambda_n$ is a generic said branch metric; $\tilde{c}_{n-i}$ are $N$ $M$-PSK code symbols univocally associated to a relevant said branch of the trellis; and $x_{n-i}$ are $N$ sequential samples obtained filtering said converted signal ($r(t)$) through said filter (FRIC) matched to the transmitted pulse; the asterisk (*) denoting complex conjugate symbols and samples.

4. Non-coherent reception method according to claim 1 or 2, **characterized in that** when said code symbols ($\{\tilde{c}_n\}$) correspond to $M$ discrete phase values of said modulated carrier, or $M$-PSK, and the coding used is differential, the analytical expression of branch metrics with the reconstructed phase reference is the following:

$$\lambda_n = \mathrm{Re}\left\{\sum_{i=1}^{N-1} x_n x_{n-i}^* \prod_{m=0}^{i-1} \tilde{a}_{n-m}^*\right\}$$

where the $\tilde{a}_{n-m}^*$ are $N$ $M$-PSK code symbols univocally associated to a relevant said branch of the trellis.

5. Non-coherent reception method according to claim 1 or 2, **characterized in that**, when said modulation is implemented through M discrete phase and amplitude values, or M-QAM, and said coding is quadrant differential, the analytical expression of branch metrics with the reconstructed phase reference is the following:

$$\lambda_n = \frac{\mathrm{Re}\left\{\sum_{i=1}^{N-1} x_n x_{n-i}^* \tilde{a}_n^* \tilde{\mu}_{n-i} \prod_{m=1}^{i-1} \tilde{p}_{n-m}^*\right\}}{\left|\sum_{i=1}^{N-1} x_{n-i}^* \tilde{\mu}_{n-i} \tilde{p}_n^* \prod_{m=1}^{i-1} \tilde{p}_{n-m}^*\right|} - \frac{|\tilde{a}_n|^2}{2}$$

where: $\lambda_n$ is a generic said branch metric; $\tilde{a}_n$ are $N$ $M$-QAM code symbols univocally associated to a relevant said branch of the trellis; $\tilde{p}_n$ are $N$ symbols that assume values $\{\pm 1, \pm j\}$; $\tilde{\mu}_n$ is the symbol $\tilde{a}_n$ multiplied by a phasor performing a rotation of an angle multiple of $\pi/2$ that brings it in the first quadrant of the complex plane; and $x_n$ are N sequential samples obtained filtering said converted signal ($r(t)$) though said filter (FRIC) matched to the transmitted pulse; the asterisk (*) denoting complex conjugate symbols and samples.

6. Non-coherent reception method according to claim 1 or 2, **characterized in that** when said modulation is implemented through M discrete phase values, or $M$-PSK, and said coding is convolutional, the analytical expression of branch metrics with the reconstructed phase reference is the following:

$$\lambda_n = \mathrm{Re}\left\{\sum_{i=1}^{L-1}\sum_{j=0}^{\eta-1}\sum_{l=0}^{\eta-1} x_{\eta n+j} x_{\eta(n-i)+l}^* \left(\prod_{m=1}^{K} \tilde{a}_{n-m}^{g_{mj}}\right)^* \prod_{k=1}^{K} \tilde{a}_{(n-i)-k}^{g_{lu}}\right\}$$

where: $\lambda_n$ is a generic said branch metric; $\tilde{a}_n$ are $L + K - 1$ M-PSK code symbols univocally associated to a relevant said branch of the trellis; $x_n$ are $N$ sequential samples obtained filtering said converted signal ($r(t)$) though said filter (FRIC) matched to the transmitted pulse; the asterisk (*) denoting complex conjugate symbols and samples; $K$ is the code constraint length; and finally $\eta$ is a number of $K$-uple $g_{mj}$, $g_{id}$ of constants defining the code generators, such that the code rate is $1/\eta$.

7. Non-coherent reception method according to any of the previous claims, **characterized in that** when said states are defined by a number of symbols less than $N$-1, the missing code symbols to the purposes of the calculation of said path metrics being found in a relevant path surviving to said selection on the trellis operated by the Viterbi algorithm.

8. Non-coherent reception method according to any of the previous claims, **characterized in that** when the sequences of transmitted symbols include also pilot symbols, known at the reception side, and at a discrete $k$-th instant a said pilot symbol is recognized, said path metrics are subsequently calculated only on paths ending in states compatible with said pilot symbol.

9. Non-coherent reception method according to any of the previous claims, **characterized in that** when said transmitted symbols ($\{c_n\}$) are obtained from initial symbols ($\{a_n\}$) undergoing a differential coding (5) followed by a channel coding (6) invariant to phase rotations of the carrier, the trellis diagram is built up on said initial symbols ($\{a_n\}$) so that the Viterbi algorithm performs the maximum likelihood estimation of a sequence of said initial symbols ($\{a_n\}$).

**10.** Non-coherent receiver of sequences of transmitted information symbols ($\{c_n\}$) obtained by digitally modulating the phase, or both the amplitude and the phase, of a carrier transmitted on a communication channel affected by Gaussian noise, including:

- non-coherent conversion means arranged to base band convert the received signal, cascaded by a filter (FRIC) matched to the transmission pulse, in its turn cascaded by a sampler (CAMP) at symbol frequency for obtaining a sequence of complex samples ($\{x_n\}$) of the received signal;
- first memory means (SHF1) arranged for storing $N$-1 complex samples ($x_{n-1},...,x_{n-N+1}$) of said sequence ($\{x_n\}$) of the received signal preceding a current complex sample ($x_n$);
- first processor means (METRICTOT) programmed for calculating for each current complex sample ($X_n$) the values of all branch metrics ($\lambda^{(s)}_n$) of a trellis sequential diagram whose branches represent all possible transitions among states defined by all possible subsequences of complex code symbols ($\{\tilde{c}_n\}$) of finite length;
- Viterbi processor means programmed for calculating the values of path metrics at each symbol interval by summing up branch metric values on individual paths in the trellis and selecting a sequence of code symbols relevant to a path ($\{ \tilde{a}_n \}, \{ \tilde{c}_n \}$) having the maximum metric value in order to represent with maximum likelihood a corresponding sequence of transmitted symbols ($\{c_n\}$), **characterized in that** said first processor means (METRICTOT) are subdivided into a plurality of identical sub-means (METRIC(s)) adapted to calculate a relevant branch metric value ($\lambda^{(s)}_n$), each processor sub-means including:

- second memory means (METRIC(s)) for storing $N$ complex code symbols ($\tilde{c}_n,...,\tilde{c}_{n-N+1}$) univocally associated to a relevant branch of the trellis at the n$^{th}$ discrete time instant;
- first product means (PROD1) adapted to multiply said current complex sample ($x_n$) by the conjugate of a said complex code symbol ($\tilde{c}_n$) corresponding to said current complex sample;
- phase reference construction means (PROD2, 3) including:

  - second product means (PROD2) adapted to multiply said $N$-1 complex samples ($x_{n-1},...,x_{n-N+1}$) stored in said first memory means (SHF1) by the remaining $N$-1 complex conjugate code symbols ($\tilde{c}_{n-1},...,\tilde{c}_{n-N+1}$) stored in said second memory means; and
  - first adder means (3) adapted to sum up the $N$-1 values coming out from the second product means (PROD2) obtaining the phase reference of the modulated carrier;

- third product means (PROD3) adapted to multiply the value coming out from said first product means (PROD1) by the conjugate of the phase reference at the output of said first adder means (3);
- means (REAL) adapted to extract the real part of the value coming out from said third product means (PROD3);
- means (MOD) adapted to calculate the module of the phase reference at the output of said first adder means (3);
- normalization means (DIV) adapted to divide said real part by said module of the phase reference;
- second adder means (4) adapted to sum up the quotient coming out from said normalization means (DIV) with the square module, changed in sign and divided by two, of said complex code symbol ($\tilde{c}_n$) which multiplies said current complex sample ($x_n$), obtaining the said relevant branch metric value ($\lambda^{(s)}_n$).

**11.** Non-coherent receiver of the preceding claim for M-PSK modulation, **characterized in that** said relevant branch metric value ($\lambda^{(s)}_n$) is directly obtained at the output of said first adder means (3).

**Patentansprüche**

**1.** Verfahren für den nichtkohärenten Empfang von Datensymbolen ($\{c_n\}$), die durch digitale Modulation der Phase bzw. sowohl der Phase als auch der Amplitude eines Trägers erhalten werden, der über einen Datenübertragungskanal mit darin enthaltenem Gaußschem Rauschen gesendet wird, wobei das Verfahren die folgenden Schritte beinhaltet:

- Basisbandumwandlung des empfangenen Signals ($r(t)$) anschließende Filterung durch einen Filter (FRIC), der an die übertragenen Impulse angepasst ist, und Abtasten (CAMP) mit Symbolfrequenz, wodurch eine Folge von komplexen Proben ($\{x_n\}$) erhalten wird;
- sequenzielles Speichern (SHF1) von $N$-1 komplexen Proben ($x_{n-1},...,x_{n-N+1}$), die einer aktuellen komplexen Probe ($x_n$) vorangehen;

- für jede aktuelle komplexe Probe ($x_n$) Berechnen (METRICTOT) der Werte aller Zweigmaßzahlen ($\lambda^{(s)}_n$) in einem sequenziellen Trellis-Diagramm, dessen Zweige die Übergänge zwischen den Zuständen darstellen, die durch alle möglichen $N$-1 Folgen von komplexen codierten Symbolen ($\{\tilde{c}_n\}$) definiert werden;

- Verarbeiten der besagten Zweigmaßzahlen ($\lambda^{(s)}_n$) gemäß dem Viterbi-Algorithmus zum Erhalten der Werte von Pfadmaßzahlen durch Aufsummieren der Zweigmaßzahlenwerte auf einzelnen Pfaden im Trellis und Auswählen eines Pfades mit dem höchsten Maßzahlwert, um mit maximaler Wahrscheinlichkeit eine Entscheidung für die Folge der übertragenen Symbole ($\{\tilde{c}_n\}$) zu treffen,

**dadurch gekennzeichnet, dass** der Schritt des Berechnens die folgenden ersten Schritte zum Aufbauen einer Phasenreferenz für den modulierten Träger enthält:

a) Speichern von $N$ komplexen codierten Symbolen ($\tilde{c}_n,...,\tilde{c}_{n-N+1}$), die einem relevanten Zweig des Trellis zum n-ten diskreten Zeitpunkt eindeutig zugeordnet sind;

b) Aufsummieren von N-1 Produkten zwischen N-1 konjugierten komplexen Proben ($x_{n-1},...,x_{n-N+1}$), die der aktuellen komplexen Probe ($x_n$) vorangehen, und N-1 entsprechende codierte Symbole ($\tilde{c}_{n-1},...\tilde{c}_{n-N+1}$), die in dem vorangehenden Schritt a) gespeichert wurden;

c) Berechnen der Kennzahl der im vorangegangenen Schritt b) erhaltenen Summe;

d) Dividieren der in Schritt a) erhaltenen Summe durch die im vorangehenden Schritt c) berechnete besagte Kennzahl, wodurch sich die besagte Phasenreferenz des modulierten Trägers ergibt;

und die folgenden Schritte zum Berechnen jedes Wertes der Zweigmaßzahl ($\lambda^{(s)}_n$):

e) Multiplizieren der besagten Phasenreferenz mit der aktuellen komplexen Probe ($x_n$) und Multiplizieren des Ergebnisses mit dem konjugierten Wert des komplexen Codesymbols ($\tilde{c}_n$), das der aktuellen komplexen Probe ($x_n$) entspricht, und Übernehmen des Realteils;

f) Berechnen des Quadrats der Kennzahl des komplexen Codesymbols ($\tilde{c}_n$) unter Zuhilfenahme des vorangehenden Schrittes e), Dividieren durch zwei und Subtrahieren vom in Schritt e) erhaltenen Ergebnis, wodurch sich ein tatsächlicher Zweigmaßzahlwert ($\lambda^{(s)}_n$) ergibt.

2. Verfahren des nichtkohärenten Empfangs nach dem vorangehenden Anspruch, **dadurch gekennzeichnet, dass** der allgemeine analytische Ausdruck von Zweigmaßzahlen $\lambda_n$ mit der neu aufgebauten Phasenreferenz der folgende ist:

$$\lambda_n = \frac{\text{Re}\left\{\sum_{i=1}^{N-1} x_n x_{n-i}^* \tilde{c}_n^* \tilde{c}_{n-i}\right\}}{\left|\sum_{i=1}^{N-1} x_{n-i}^* \tilde{c}_{n-i}\right|} - \frac{\left|\tilde{c}_n\right|^2}{2}$$

wobei: ($\tilde{c}_{n-1},...,\tilde{c}_{n-N+1}$) $N$ Codesymbole sind, die einem relevanten Zweig des Trellis eindeutig zugeordnet sind; ($x_{n-1},...,x_{n-N+1}$) $N$ sequenzielle Proben sind, die sich aus der Filterung des besagten umgewandelten Signals ($r(t)$) durch den besagten Filter (FRIC) ergeben, der an die übertragenen Impulse angepasst ist; wobei der Stern (*) die konjugiert-komplexen Werte bezeichnet.

3. Verfahren des nichtkohärenten Empfangs nach Anspruch 1 oder 2, **dadurch gekennzeichnet, dass** der analytische Ausdruck von Zweigmaßzahlen mit der neu aufgebauten Phasenreferenz dem nachfolgenden Ausdruck entspricht, wenn die Codesymbole ($\{\tilde{c}_n\}$) M diskreten Phasenwerten des modulierten Trägers entsprechen:

$$\lambda_n = \text{Re}\left\{\sum_{i=1}^{N-1} x_n x_{n-i}^* \tilde{c}_n^* \tilde{c}_{n-i}\right\}$$

wobei: $\lambda_n$ eine generische der besagten Zweigmaßzahlen ist; $\tilde{c}_{n-i}$ $N$ M-PSK-Codesymbole sind, die einem relevanten der besagten Zweige des Trellis eindeutig zugeordnet sind; und $x_{n-i}$ $N$ sequenzielle Proben sind, die sich aus der Filterung des besagten umgewandelten Signals ($r(t)$) durch den besagten Filter (FRIC) ergeben, der an die übertragenen Impulse angepasst ist; wobei der Stern (*) die konjugiert-komplexen Werte und Proben bezeichnet.

4.  Verfahren des nichtkohärenten Empfangs nach Anspruch 1 oder 2, **dadurch gekennzeichnet, dass** der analytische Ausdruck von Zweigmaßzahlen mit der neu aufgebauten Phasenreferenz dem nachfolgenden Ausdruck entspricht, wenn die Codesymbole ($\{\tilde{\varepsilon}_n\}$) $M$ diskreten Phasenwerten des modulierten Trägers oder M-PSK entsprechen und es sich bei der verwendeten Codierung um eine Differenzcodierung handelt:

$$\lambda_n = \mathrm{Re}\left\{\sum_{i=1}^{N-1} x_n x_{n-i}^* \prod_{m=0}^{i-1} \tilde{a}_{n-m}^*\right\}$$

wobei die $\tilde{a}_{n-m}^*$ $N$ M-PSK-Codesymbole sind, die einem relevanten besagten Zweig des Trellis eindeutig zugeordnet sind.

5.  Verfahren des nichtkohärenten Empfangs nach Anspruch 1 oder 2, **dadurch gekennzeichnet, dass** der analytische Ausdruck von Zweigmaßzahlen mit der neu aufgebauten Phasenreferenz dem nachfolgenden Ausdruck entspricht, wenn die besagte Modulation durch M diskrete Phasen- und Amplitudenwerte bzw. M-QAM ausgeführt wird und es sich bei der besagten Codierung um eine Quadrant-Differenzcodierung handelt:

$$\lambda_n = \frac{\mathrm{Re}\left\{\sum_{i=1}^{N-1} x_n x_{n-i}^* \tilde{a}_n^* \tilde{\mu}_{n-i} \prod_{m=1}^{i-1} \tilde{p}_{n-m}^*\right\}}{\left|\sum_{i=1}^{N-1} x_{n-i}^* \tilde{\mu}_{n-i} \tilde{p}_n^* \prod_{m=1}^{i-1} \tilde{p}_{n-m}^*\right|} - \frac{|\tilde{a}_n|^2}{2}$$

wobei: $\lambda_n$ eine generische der besagten Zweigmaßzahlen ist; $\tilde{a}_n$ $N$ M-QAM-Codesymbole sind, die einem relevanten der besagten Zweige des Trellis eindeutig zugeordnet sind; $\tilde{p}_n$ $N$ Symbole sind, die Werte $\{\pm 1, \pm j\}$ einnehmen; $\tilde{\mu}_n$ das Symbol $\tilde{a}_n \tilde{\pi}_n$ ist, das mit einem Zeiger multipliziert wird, der eine Drehung des Vielfachen des Winkels n/2 ausführt, die es in den ersten Quadranten der komplexen Ebene bringt; und $x_n$ $N$ sequenzielle Proben sind, die sich aus der Filterung des besagten umgewandelten Signals ($r(t)$) durch den besagten Filter (FRIC) ergeben, der an die übertragenen Impulse angepasst ist; wobei der Stern (*) konjugiert-komplexe Symbole und Proben bezeichnet.

6.  Verfahren des nichtkohärenten Empfangs nach Anspruch 1 oder 2, **dadurch gekennzeichnet, dass** der analytische Ausdruck von Zweigmaßzahlen mit der neu aufgebauten Phasenreferenz dem nachfolgenden Ausdruck entspricht, wenn die besagte Modulation durch M diskrete Phasenwerte bzw. *M*-PSK ausgeführt wird und es sich bei der besagten Codierung um eine Faltungscodierung handelt:

$$\lambda_n = \mathrm{Re}\left\{\sum_{i=1}^{L-1}\sum_{j=0}^{\eta-1}\sum_{l=0}^{\eta-1} x_{\eta n+j} x_{\eta(n-i)+l}^* \left(\prod_{m=1}^{K} \tilde{a}_{n-m}^{g_{mj}}\right)^* \prod_{k=1}^{K} \tilde{a}_{(n-i)-k}^{g_{kl}}\right\}$$

wobei: $\lambda_n$ eine generische der besagten Zweigmaßzahlen ist; $\tilde{a}_n$ $L + K - 1$ *M*-PSK-Codesymbole sind, die einem relevanten der besagten Zweige des Trellis eindeutig zugeordnet sind; $x_n$ $N$ sequenzielle Proben sind, die sich aus der Filterung des besagten umgewandelten Signals ($r(t)$) durch den besagten Filter (FRIC) ergeben, der an die übertragenen Impulse angepasst ist; wobei der Stern (*) konjugiert-komplexe Symbole und Proben bezeichnet; K die Länge der Codebegrenzung ist; und schließlich η eine Anzahl von K-tupeln $g_{mj}.g_{kl}$ von Konstanten ist, die die Code-Erzeuger definieren, so dass die Code-Rate l/η beträgt.

7.  Verfahren des nichtkohärenten Empfangs nach einem der vorhergehenden Ansprüche, **dadurch gekennzeichnet, dass** die fehlenden Codesymbole für die Zwecke der Berechnung der besagten Pfadmaßzahl in einem relevanten Pfad aufgefunden werden, der bei der vom Viterbi-Algorithmus durchgeführten besagten Auswahl überlebt hat, wenn die besagten Zustände durch eine Anzahl von weniger als N-1 Symbolen definiert sind.

8.  Verfahren des nichtkohärenten Empfangs nach einem der vorhergehenden Ansprüche, **dadurch gekennzeichnet, dass** die besagten Pfadmaßzahlen nachfolgend nur auf Pfaden berechnet werden, die Zuständen enden, die mit besagtem Vorabsymbol kompatibel sind, wenn die Folgen von übertragenen Symbolen auch auf der Empfängerseite bekannte Vorabsymbole enthalten und eines der besagten Vorabsymbole zu einem diskreten k-ten Zeitpunkt erkannt wird.

9. Verfahren des nichtkohärenten Empfangs nach einem der vorhergehenden Ansprüche, **dadurch gekennzeichnet, dass**, wenn die besagten übertragenen Symbole ($\{c_n\}$) aus Anfangssymbolen ($\{a_n\}$) gewonnen werden, auf die eine Differenzcodierung (5) gefolgt von einer Kanalcodierung (6) angewendet wird, die gegenüber Phasendrehungen auf dem Träger invariant ist, das Trellis-Diagramm aus den besagten Anfangssymbolen ($\{a_n\}$) aufgebaut ist, so dass der Viterbi-Algorithmus die Schätzung der höchsten Wahrscheinlichkeit einer Folge der besagten Anfangssymbole ($\{a_n\}$) ausführt.

10. Nichtkohärenter Empfänger von Folgen übertragener Datensymbole ($\{c_n\}$), die durch digitale Modulation der Phase bzw. sowohl der Phase als auch der Amplitude eines Trägers erhalten werden, der über einen Datenübertragungskanal mit darin enthaltenem Gaußschem Rauschen gesendet wird, wobei der Empfänger Folgendes enthält:

- ein Mittel zur nichtkohärenten Umwandlung, das in der Lage ist, die empfangenen Signale im Basisband umzuwandeln, gefolgt von einem an die Übertragungsimpulse angepassten Filter (FRIC), auf den wiederum ein Sampler (CAMP) folgt, der bei Symbolfrequenz arbeitet, um eine Folge von komplexen Proben $\{x_n\}$ des empfangenen Signals zu erhalten;

- ein erstes Speichermittel (SHF1), das in der Lage ist, $N$-1 komplexe Proben ($x_{n-1},...,x_{n-N+1}$) der besagten Folge $\{x_n\}$ des empfangenen Signals zu speichern, das einer aktuellen komplexen Probe ($x_n$) vorangeht;

- ein erstes Prozessormittel (METRICTOT), das für die Berechnung jeder aktuellen komplexen Probe ($x_n$) der Werte aller Zweigmaßzahlen ($\lambda_n^{(s)}$) eines sequenziellen Trellis-Diagramms programmiert ist, dessen Zweige alle möglichen Übergänge zwischen den Zuständen darstellen, die durch alle möglichen Teilfolgen von komplexen Codesymbolen ($\{\tilde{c}_n\}$) endlicher Länge definiert werden;

- ein Viterbi-Prozessormittel, das programmiert ist für die Berechnung der Werte von Pfadmaßzahlen an jedem Symbolintervall durch Aufsummieren der Maßzahlenwerte einzelner Pfade im Trellis und für die Auswahl einer Folge von Codesymbolen, die für einen Pfad ($\{\tilde{a}_n\},\{\tilde{c}_n\}$) relevant sind, der einen maximalen Maßzahlenwert aufweist, um eine entsprechende Folge von übertragenen Symbolen($\{\tilde{c}_n\}$) mit einer maximalen Wahrscheinlichkeit darzustellen, **dadurch gekennzeichnet, dass** das besagte erste Prozessormittel (METRICTOT) in eine Vielzahl von identischen Teilmitteln (METRIC(s)) unterteilt ist, die in der Lage sind, einen relevanten Zweigmaßzahlenwert ($\lambda_n^{(s)}$) zu berechnen, wobei jedes Prozessor-Teilmittel Folgendes enthält:

- ein zweites Speichermittel (METRIC(s)) zum Speichern von $N$ komplexen Codesymbolen ($\tilde{c}_n,...,\tilde{c}_{n-N+1}$), die einem relevanten Zweig des Trellis zum n-ten diskreten Zeitpunkt eindeutig zugeordnet sind;
- ein erstes Produktmittel (PROD1), das in der Lage ist, die besagte aktuelle komplexe Probe ($x_n$) mit dem konjugierten Wert eines besagten komplexen Codesymbols ($\tilde{c}_n$) zu multiplizieren, der der besagten aktuellen komplexen Probe entspricht;
- Phasenreferenz-Aufbaumittel (PROD2, 3), die Folgendes enthalten:

  - ein zweites Produktmittel (PROD2), das in der Lage ist, die besagten $N$-1 komplexen Proben ($x_{n-1},..., x_{n-N+1}$), die in dem besagten ersten Speichermittel (SHF1) gespeichert sind, mit den verbleibenden $N$-1 komplexkonjugierten Codesymbolen ($\tilde{c}_{n-1},...,\tilde{c}_{n-N+1}$) zu multiplizieren, die in dem besagten zweiten Speichermittel gespeichert sind; und
  - ein erstes Addiermittel(3), das in der Lage ist, die $N$-1 Werte aufzusummieren, die vom zweiten Produktmittel (PROD2) kommen, wodurch die Phasenreferenz des modulierten Trägers erhalten wird;

- ein drittes Produktmittel (PROD3), das in der Lage ist, den Wert, der vom besagten ersten Produktmittel (PROD1) kommt, mit dem konjugierten Wert der Phasenreferenz am Ausgang des besagten ersten Addiermittels (3) zu multiplizieren;
- ein Mittel (REAL), das in der Lage ist, den Realteil Wertes zu extrahieren, der vom besagten dritten Produktmittel (PROD3) kommt;
- ein Mittel (MOD), das in der Lage ist, die Kennzahl der Phasenreferenz am Ausgang des besagten ersten Addiermittels (3) zu berechnen;
- ein Normalisierungsmittel (DIV), das in der Lage ist, den besagten Realteil durch die besagte Kennzahl der Phasenreferenz zu dividieren;

- ein zweites Addiermittel (4), das in der Lage ist, den aus dem besagten Normalisierungsmittel (DIV) kommenden Quotienten zum Quadrat der Kennzahl hinzuzuaddieren, dessen Vorzeichen geändert und das durch zwei dividiert wird, von dem besagten komplexen Codesymbol ($\tilde{c}_n$), das die besagte aktuelle komplexe Probe ($x_n$) multipliziert, wodurch sich der besagte relevante Zweigmaßzahlenwert ($\lambda_n^{(s)}$) ergibt.

11. Nichtkohärenter Empfänger des vorangehenden Anspruchs für M-PSK-Modulation, **dadurch gekennzeichnet, dass** der besagte relevante Zweigmaßzahlenwert ($\lambda^{(s)}_n$) direkt am Ausgang des besagten ersten Addiermittels (3) zur Verfügung steht.

**Revendications**

1. Procédé de réception non cohérente de séquences de symboles d'information ($\{\tilde{c}_n\}$) obtenues par modulation numérique de la phase, ou à la fois de l'amplitude et de la phase, d'une porteuse transmise sur une voie de communication affectée par du bruit gaussien, comprenant les étapes de :

   - conversion en bande de base du signal reçu ($r(t)$), suivie du filtrage par un filtre (FRIC) adapté à l'impulsion transmise et de l'échantillonnage (CAMP) à la fréquence des symboles, avec obtention d'une séquence d'échantillons complexes ($\{x_n\}$) ;

   - stockage séquentiel (SHF1) de $N$-1 échantillons complexes ($x_{n-1},...,x_{n-N+1}$) précédant un échantillon complexe actuel ($x_n$) ;

   - calcul (METRICTOT) pour chaque échantillon complexe actuel ($x_n$) des valeurs de toutes les métriques de branche ($\lambda_n^{(s)}$) sur un diagramme séquentiel en treillis dont les banches représentent les transitions entre des états définis par toutes les N-1 sous-séquences possibles de symboles codés complexes ($\{\tilde{c}_n\}$) ;

   - traitement desdites métriques de branches ($\lambda_n^{(s)}$) selon l'algorithme de Viterbi pour obtenir les valeurs de métriques de chemin en sommant les valeurs de métriques de branches sur les chemins individuels du treillis et en sélectionnant un chemin ayant la valeur de métrique maximale pour décider par maximum de vraisemblance quelle est la séquence de symboles transmis ($\{\tilde{c}_n\}$),

   **caractérisé en ce que** l'étape de calcul comprend les premières étapes suivantes pour construire une référence de phase de la porteuse modulée :

   a) stockage de $N$ symboles codés complexes ($\tilde{c}_n,...,\tilde{c}_{n-N+1}$) associés univoquement à une branche afférente du treillis au ne instant discret ;
   b) sommation de N-1 produits entre N-1 échantillons complexes conjugués ($x_{n-1},...,x_{n-N+1}$) précédant l'échantillon complexe actuel ($x_n$) et N-1 symboles codés complexes correspondants ($\tilde{c}_{n-1},...,\tilde{c}_{n-N+1}$) stockés à l'étape a) précédente ;
   c) calcul du module de la somme obtenue à l'étape b) précédente ;
   d) division de la somme obtenue à l'étape a) par ledit module calculé à l'étape c) précédente pour obtenir ladite référence de phase de la porteuse modulée ;
   et les secondes étapes suivantes pour calculer chaque valeur de ladite métrique de branche ($\lambda_n^{(s)}$) :
   e) multiplication de ladite référence de phase par l'échantillon complexe actuel ($x_n$) et multiplication du résultat par le conjugué du symbole codé complexe ($\tilde{c}_n$) correspondant à l'échantillon complexe actuel ($x_n$) et extraction de la partie réelle ;
   f) calcul du carré du module du symbole codé complexe ($\tilde{c}_n$) entrant dans l'étape e) précédente, division par deux et soustraction du résultat obtenu à l'étape e) pour obtenir une valeur actuelle de la métrique de branche ($\lambda_n^{(s)}$).

2. Procédé de réception non cohérente selon la revendication précédente, **caractérisé en ce que** l'expression analytique générale des métriques de branche $\lambda_n$ avec la référence de phase reconstituée est la suivante :

$$\lambda_n = \frac{\mathrm{Re}\left\{\sum_{i=1}^{N-1} x_n x_{n-i}^* \widetilde{c}_n^* \widetilde{c}_{n-i}\right\}}{\left|\sum_{i=1}^{N-1} x_{n-i}^* \widetilde{c}_{n-i}\right|} - \frac{\left|\widetilde{c}_n\right|^2}{2}$$

où : $(\widetilde{c}_{n-1},...,\widetilde{c}_{n-N+1})$ sont $N$ symboles codés associés univoquement à une branche afférente du treillis ; $(x_{n-1},..., x_{n-N+1})$ sont $N$ échantillons séquentiels obtenus en filtrant ledit signal converti ($r(t)$) au moyen dudit filtre (FRIC) adapté à l'impulsion transmise ; l'astérisque (*) indiquant des valeurs complexes conjuguées.

**3.** Procédé de réception non cohérente selon la revendication 1 ou 2, **caractérisé en ce que**, lorsque lesdits symboles codés ($\{\widetilde{c}_n\}$) correspondent à M valeurs discrètes de phase de ladite porteuse modulée, ou MDP-M, l'expression analytique des métriques de branche avec la référence de phase reconstituée est la suivante :

$$\lambda_n = \mathrm{Re}\left\{\sum_{i=1}^{N-1} x_n x_{n-i}^* \widetilde{c}_n^* \widetilde{c}_{n-i}\right\}$$

où : $\lambda_n$ est un générique desdites métriques de branche ; $\widetilde{c}_{n-i}$ sont N symboles codés MDP-M associés univoquement auxdites branches afférentes du treillis, et $x_{n-i}$ sont $N$ échantillons séquentiels obtenus en filtrant ledit signal converti ($r(t)$) au moyen dudit filtre (FRIC) adapté à l'impulsion transmise, l'astérisque (*) indiquant des symboles et échantillons conjugués complexes.

**4.** Procédé de réception non cohérente selon la revendication 1 ou 2, **caractérisé en ce que**, lorsque lesdits symboles codés ($\{\widetilde{c}_n\}$) correspondent à M valeurs discrètes de phase de ladite porteuse modulée, ou MDP-M, et que le codage utilisé est différentiel, l'expression analytique des métriques de branche avec la référence de phase reconstituée est la suivante :

$$\lambda_n = \mathrm{Re}\left\{\sum_{i=1}^{N-1} x_n x_{n-i}^* \prod_{m=0}^{i-1} \widetilde{a}_{n-m}^*\right\}$$

où : les $\widetilde{a}^*_{n-m}$ sont $N$ symboles codés MDP-$M$ associés univoquement auxdites branches afférentes du treillis.

**5.** Procédé de réception non cohérente selon la revendication 1 ou 2, **caractérisé en ce que**, lorsque ladite modulation est mise en oeuvre au moyen de M valeurs discrètes de phase et d'amplitude, ou MAQ-M, et que ledit codage est différentiel à quadrant, l'expression analytique des métriques de branche avec la référence de phase reconstituée est la suivante :

$$\lambda_n = \frac{\mathrm{Re}\left\{\sum_{i=1}^{N-1} x_n x_{n-i}^* \widetilde{a}_n^* \widetilde{\mu}_{n-i} \prod_{m=1}^{i-1} \widetilde{p}_{n-m}^*\right\}}{\left|\sum_{i=1}^{N-1} x_{n-i}^* \widetilde{\mu}_{n-i} \widetilde{p}_n^* \prod_{m=1}^{i-1} \widetilde{p}_{n-m}^*\right|} - \frac{\left|\widetilde{a}_n\right|^2}{2}$$

où : $\lambda_n$ est un générique desdites métriques de branche ; $\widetilde{a}_n$ sont $N$ symboles codés MAQ-M associés univoquement auxdites branches afférentes du treillis ; $\widetilde{p}_n$ sont $N$ symboles qui prennent des valeurs $\{\pm 1, \pm j\}$ ; $\widetilde{\mu}_n$ est le symbole $\widetilde{a}_n$ multiplié par un phaseur effectuant une rotation d'un angle multiple de $\pi/2$ qui l'amène dans le premier quadrant du plan complexe, et $x_n$ sont $N$ échantillons séquentiels obtenus en filtrant ledit signal converti ($r(t)$) au moyen dudit filtre (FRIC) adapté à l'impulsion transmise, l'astérisque (*) indiquant des symboles et échantillons conjugués complexes.

**6.** Procédé de réception non cohérente selon la revendication 1 ou 2, **caractérisé en ce que**, lorsque ladite modulation est mise en oeuvre au moyen de *M* valeurs discrètes de phase, ou MDP-*M*, et que ledit codage est convolutif, l'expression analytique des métriques de branche avec la référence de phase reconstituée est la suivante :

$$\lambda_n = \mathrm{Re}\left\{ \sum_{i=1}^{L-1} \sum_{j=0}^{\eta-1} \sum_{l=0}^{\eta-1} x_{\eta n+j} x_{\eta(n-i)+l}^* \left( \prod_{m=1}^{K} \widetilde{a}_{n-m}^{g_{mj}} \right)^* \prod_{k=1}^{K} \widetilde{a}_{(n-i)-k}^{g_{kl}} \right\}$$

où : $\lambda_n$ est un générique desdites métriques de branche ; $\tilde{a}_n$ sont $L + K - 1$ symboles codés MDP-*M* associés univoquement auxdites branches afférentes du treillis ; $x_n$ sont $N$ échantillons séquentiels obtenus en filtrant ledit signal converti ($r(t)$) au moyen dudit filtre (FRIC) adapté à l'impulsion transmise, l'astérisque (*) indiquant des symboles et échantillons conjugués complexes ; $K$ est la longueur formant contrainte de code, et enfin η est un nombre de K-uples $g_{mj}, g_{kl}$ de constantes définissant les générateurs de code, de telle sorte que le débit soit de l/η.

**7.** Procédé de réception non cohérente selon l'une quelconque des revendications précédentes, **caractérisé en ce que**, lorsque lesdits états sont définis par un nombre de symboles inférieur à *N*-1, les symboles codés manquants pour les besoins du calcul desdites métriques de chemin sont trouvés sur un chemin afférent ayant survécu à ladite sélection opérée sur le treillis par l'algorithme de Viterbi.

**8.** Procédé de réception non cohérente selon l'une quelconque des revendications précédentes, **caractérisé en ce que**, lorsque les séquences de symboles transmis comprennent aussi des symboles pilotes, connus du côté réception, et qu'à un *k*e instant discret, l'un desdits symboles pilotes est reconnu, lesdites métriques de chemin sont ensuite calculées uniquement sur des chemins finissant dans des états compatibles avec ledit symbole pilote.

**9.** Procédé de réception non cohérente selon l'une quelconque des revendications précédentes, **caractérisé en ce que**, lorsque lesdits symboles transmis ($\{c_n\}$) sont obtenus à partir de symboles initiaux ($\{a_n\}$) subissant un codage différentiel (5) suivi d'un codage de voie (6) invariant aux rotations de phase de la porteuse, le diagramme en treillis est constitué sur lesdits symboles initiaux ($\{a_n\}$) de telle sorte que l'algorithme de Viterbi effectue l'estimation par maximum de vraisemblance d'une séquence desdits symboles initiaux ($\{a_n\}$).

**10.** Récepteur non cohérent de séquences de symboles d'information transmis ($\{c_n\}$) obtenus par modulation numérique de la phase, ou à la fois de l'amplitude et de la phase, d'une porteuse transmise sur une voie de communication affectée par du bruit gaussien, comprenant :

- un moyen de conversion non cohérente prévu pour convertir en bande de base le signal reçu, suivi en cascade par un filtre (FRIC) adapté à l'impulsion de transmission, suivi à son tour en cascade par un échantillonneur (CAMP) à la fréquence des symboles pour obtenir une séquence d'échantillons complexes $\{x_n\}$ du signal reçu ;
- un premier moyen formant mémoire (SHF1) prévu pour stocker *N*-1 échantillons complexes ($x_{n-1},...,x_{n-N+1}$) de ladite séquence $\{x_n\}$ dudit signal reçu précédant un échantillon complexe actuel ($x_n$) ;
- un premier moyen formant processeur (METRICTOT) programmé pour calculer pour chaque échantillon complexe actuel ($x_n$) les valeurs de toutes les métriques de branche ($\lambda^{(s)}_n$) d'un diagramme séquentiel en treillis dont les branches représentent toutes les transitions possibles entre des états définis par toutes les sous-séquences possibles de symboles codés complexes ($\{\tilde{c}_n\}$) de longueur finie ;
- un moyen formant processeur de Viterbi programmé pour calculer les valeurs de métriques de chemin à chaque intervalle entre symboles en sommant les valeurs de métriques de branche sur des chemins individuels du treillis et en sélectionnant une séquence de symboles codés afférents à un chemin ($\{\tilde{a}_n\}, \{\tilde{c}_n\}$) ayant la valeur de métrique maximale afin de représenter avec un maximum de vraisemblance une séquence correspondante de symboles transmis ($\{\tilde{c}_n\}$),

**caractérisé en ce que** ledit premier moyen formant processeur (METRICTOT) est subdivisé en une pluralité de sous-moyens identiques (METRIC(s)) adaptés pour calculer une valeur afférente de métrique de branche ($\lambda^{(s)}_n$), chaque sous-moyen formant processeur comprenant :

- un second moyen formant mémoire (METRIC(s)) pour stocker *N* symboles codés complexes ($\tilde{c}_n,...,\tilde{c}_{n-N+1}$) associés univoquement à une branche afférente du treillis au ne instant discret ;
- un premier moyen à produit (PROD1) adapté pour multiplier ledit échantillon complexe actuel ($x_n$) par le conjugué de l'un desdits symboles codés complexes ($\tilde{\tau}_n$) correspondant audit échantillon complexe actuel ;

- un moyen de constitution de référence de phase (PROD2, 3) comprenant :

  - un deuxième moyen à produit (PROD2) adapté pour multiplier lesdits $N$-1 échantillons complexes ($x_{n-1}$,...., $x_{n-N+1}$) stockés dans ledit premier moyen formant mémoire (SHF1) par les $N$-1 symboles codés conjugués complexes restants ($\tilde{\tau}_{n-1}$,...,$\tilde{\tau}_{n-N+1}$) stockés dans ledit second moyen formant mémoire, et
  - un premier moyen formant additionneur (3) adapté pour sommer les $N$-1 valeurs provenant du second moyen à produit (PROD2) pour obtenir la référence de phase de la porteuse modulée ;

- un troisième moyen à produit (PROD3) adapté pour multiplier la valeur provenant dudit premier moyen à produit (PROD1) par le conjugué de la référence de phase à la sortie dudit premier moyen formant additionneur (3) ;
- un moyen (REAL) adapté pour extraire la partie réelle de la valeur provenant dudit troisième moyen à produit (PROD3) ;
- un moyen (MOD) adapté pour calculer le module de la référence de phase à la sortie dudit premier moyen formant additionneur (3) ;
- un moyen de normalisation (DIV) adapté pour diviser ladite partie réelle par ledit module de la référence de phase ;
- un second moyen formant additionneur (4) adapté pour sommer le quotient provenant dudit moyen de normalisation (DIV) avec le module au carré, ayant changé de signe et divisé par deux, dudit symbole codé complexe ($\tilde{\tau}_n$) qui multiplie ledit échantillon complexe actuel ($x_n$), pour obtenir ladite valeur afférente de métrique de branche ($\lambda_n^{(s)}$).

11. Récepteur non cohérent selon la revendication précédente pour modulation MDP-M, **caractérisé en ce que** ladite valeur afférente de métrique de branche ($\lambda_n^{(s)}$) est directement obtenue à la sortie dudit premier moyen formant additionneur (3).

FIG. 1

complex signal

FIG. 6

FIG. 7

FIG. 2

real signal

complex signal

EP 0 985 302 B1

$$(z_n) \quad (z_{n-1}) \quad (z_{n-2}) \quad \cdots \quad (z_{n-N+1})$$
$$x_n \qquad x_{n-1} \qquad x_{n-2} \qquad \qquad x_{n-N+1}$$

METRIC(s)

METRICTOT

$$\lambda_n^{(1)} \qquad \lambda_n^{(2)} \qquad \lambda_n^{(s)} \qquad \lambda_n^{(SM')}$$

→ real signal

→ complex signal

⟹ $N$ complex signals

FIG. 3

**FIG. 4**

FIG. 5